# EUROPEAN PATENT SPECIFICATION

(11) **EP 2 998 529 B1**
(45) Date of publication and mention of the grant of the patent: **27.02.2019**
(21) Application number: 14787477.0
(22) Date of filing: 24.04.2014
(51) Int. Cl.: F01N 3/02, B01D 47/00, B01D 50/00, B01D 53/18, B01D 53/50, B01D 53/52, B01D 53/77, F01N 3/04, F02M 26/00

(54) **EXHAUST GAS PURIFICATION DEVICE FOR MARINE DIESEL ENGINE USING LOW-QUALITY FUEL SUCH AS FUEL OIL CONTAINING HIGH CONCENTRATION OF SULFUR**
ABGASREINIGUNGSVORRICHTUNG FÜR EINEN SCHIFFSDIESELMOTOR MIT MINDERWERTIGEM BRENNSTOFF WIE BRENNSTOFFÖL MIT HOHEM SCHWEFELGEHALT
DISPOSITIF D'ÉPURATION DE GAZ D'ÉCHAPPEMENT POUR MOTEUR DIESEL MARIN UTILISANT UN CARBURANT DE BASSE QUALITÉ TEL QUE DU MAZOUT CONTENANT UNE CONCENTRATION ÉLEVÉE DE SOUFRE

(30) Priority: 26.04.2013 JP 2013094390; 07.04.2014 JP 2014078668
(43) Date of publication of application: 23.03.2016
(73) Proprietor: Usui Kokusai Sangyo Kaisha Ltd., Shizuoka 411-8610 (JP)
(72) Inventor: FURUGEN, Munekatsu, Nishinomiya-shi Hyogo 662-0875 (JP); MAKINO, Tadashi, Takatsuki-shi Osaka 569-1020 (JP); TAKAHASHI, Teruhisa, Sunto-gun Shizuoka 411-8610 (JP); TAKIKAWA, Kazunori, Sunto-gun Shizuoka 411-8610 (JP)
(74) Representative: Hoppe, Lars
(86) International application number: PCT/JP2014/062119
(87) International publication number: WO 2014/175467

(56) References cited:
- EP-A1- 2 301 647
- EP-A1- 2 489 843
- EP-A1- 3 085 910
- WO-A1-2012/081290
- WO-A1-2014/041734
- JP-A- S4 934 472
- JP-A- S4 934 472
- JP-A- 2003 126 690
- JP-A- 2008 080 261
- JP-A- 2012 140 928

## Description

### Technical Field

The present invention relates to an exhaust gas treatment technique for a large-displacement marine diesel engine using fuel particularly equivalent to or lower than fuel oil in quality [while fuel oil is represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries, these representations are hereinafter collectively referred to as fuel oil in the present invention] for marine, electric power generation, industries, and so forth, the treatment for removing particulate matter (hereinafter referred to as "PM") mainly including carbon, and harmful gas, such as sulfur oxides (hereinafter referred to as "SOx") and nitrogen oxides (hereinafter referred to as "NOx"), contained in exhaust gas of a marine diesel engine. In particular, the present invention relates to an exhaust gas purification equipment using corona discharge in a large-displacement marine diesel engine which discharges high-temperature exhaust gas.

### Background Art

As a motive power source for various marines, electric power generators, large construction machines and, furthermore, various automobiles, and so forth, diesel engines have been widely adopted. PM and NOx contained in exhaust gas discharged from the diesel engines not only cause air pollution as well known but also are substances extremely hazardous to human bodies. Therefore, purification of the exhaust gas is extremely important. Thus, many suggestions have already been made, such as an improvement of a diesel engine combustion scheme, adoption of various exhaust gas filters, an exhaust gas recirculation (hereinafter referred to as "EGR") method, the selective catalytic reduction (hereinafter referred to as "SCR") process, and an electrical treatment method by using corona discharge, and some of such suggestions have been partially put to practical use.

Here, PM (particular matter) components in exhaust gas of a diesel engine is classified into two, that is, soluble organic fractions (hereinafter referred to as "SOF") and insoluble organic fractions (hereinafter referred to as "ISF"). Of these, the SOF components have unburned ones of fuel and lubricant oil as main components, including harmful substances such as carcinogenetic polycyclic aromatics. On the other hand, the ISF components have low-electrical-resistivity carbon (soot) and sulfate components as main components. Due to influences of these SOF components and ISF components on human bodies and environments, exhaust gas are desired to be reduced as much as possible. In particular, the degree of adverse effects of PM on living bodies are particularly problematic when the particle diameter is of a nanometer size.

As the electrical treatment method by using corona discharge, for example, a method and device described below (Patent Literatures 1 and 2) have been suggested.

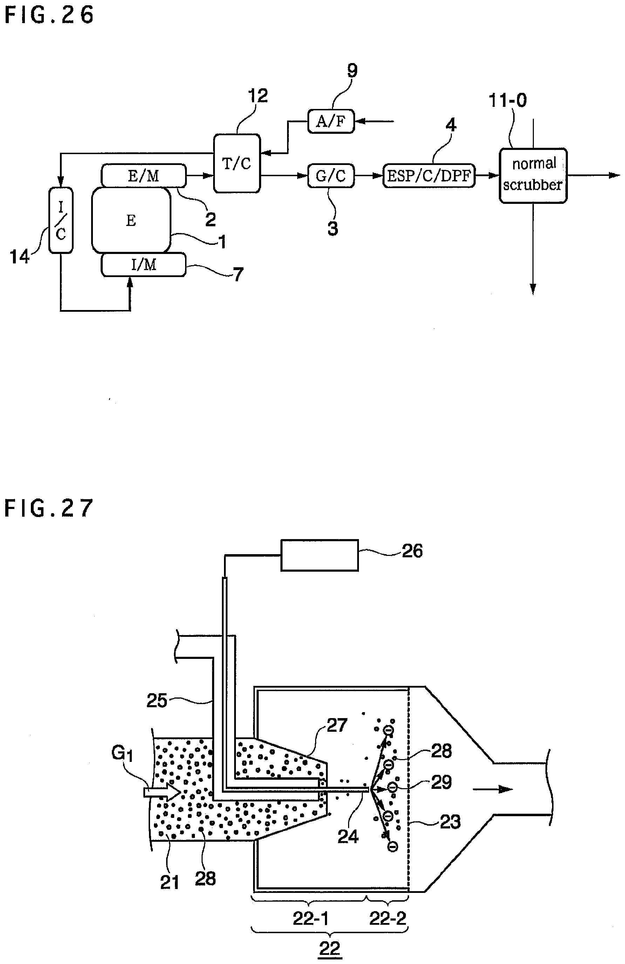

In Patent Literature 1, as schematically described in Figure 27, the Applicant has suggested an electrical treatment method and equipment for exhaust gas of a diesel engine, wherein a discharging/charging unit 22 formed of a corona discharging unit 22-1 and a charging unit 22-2 is provided with an exhaust gas passage 21 to charge PM 28 in exhaust gas G1 having carbon as a main component with corona-discharged electrons 29, and the charged PM 28 is collected by a collection plate 23 disposed in the exhaust gas passage 21, the method and equipment having the configuration is such that an electrode needle 24 in the discharging/charging unit 22 has a short length in a flowing direction of an exhaust gas flow, and the collection plate 23 is disposed in a direction perpendicular to the flowing direction of the exhaust gas flow. In Figure 27, the reference numeral 25 denotes a seal gas pipe, 26 denotes a high-voltage power supply device, and 27 denotes an exhaust gas induction pipe.

Also, in the sixth example of Patent Literature 2, as schematically described in Figure 28, the Applicant has suggested an exhaust gas purification equipment for a diesel engine, wherein an exhaust gas cooler 33, an electrostatic cyclone exhaust gas purification equipment 34, and a normal scrubber 40 are disposed to an exhaust pipe downstream from an exhaust manifold 32 of a diesel engine 31 using low-quality fuel equivalent to or less than fuel oil as fuel, a branching part 35 is provided to an exhaust pipe downstream from the normal scrubber 40 to connect an EGR piping which diverts part of exhaust gas as EGR gas to the branching part 35, a steam separator 38 is provided to the EGR piping, and EGR gas is returned to an intake pipe from an intake manifold 37 or an air filter 39 while being subjected to flow-rate control by an EGR valve 36.

On the other hand, Non-Patent Literature 1 defines, in Chapter 3 "Requirements for machinery spaces of all ships", Part C "Control of discharge of oil", Regulation 15 "Control of discharge of oil", oil concentrations of the oily mixture without dilution outside and in special areas.

Also, a Non-Patent Literature 2 suggests a technique of equipping a container ship with a diesel engine in which EGR gas branching from an exhaust pipe to a turbine of a turbocharger is purified by a scrubber and cooled by an EGR cooler, and further caused to pass through a droplets collector, and then recirculated by an EGR blower to an intercooler for intake air pressure-fed from a compressor of the turbocharger, in chapter 2 "Countermeasure technique to IMO Tier III NOx Regulations and Remaining Problem", 2-2 "Countermeasure Engine Technique to IMO Tier III NOx regulations", 2-2-2 "Exhaust Gas Circulation", p. 14-16turbochargerturbocharger. Here, IMO in Non-Patent Literature 2 is an abbreviation of the International Maritime Organization.

Furthermore, the above-described SCR system using catalytic reaction has been commonly known as a known NOx reduction technology. Patent Literature 3, WO 2012/081290 A1 (PTL 3), filed by the present Applicant, discloses a scrubber provided to an exhaust pipe on a downstream side of an electrical precipitation means in general. Patent Literature 4, EP 3 085 910 A1 (PTL 4) discloses a PM-free scrubber and a system of cooling and electrical preciptiation means of PM upstream in an exhaust line or alternatively a PM-free scrubber in an EGR line.

### Citation List

### Patent Literature

PTL 1: WO 2006/064805
PTL 2: Japanese Patent Application Laid-Open No. 2012-140928
PTL 3: WO 2012/081290 A1
PTL 4: EP 3 085 910 A1

### Non-Patent Literature

NPTL 1: International Convention for Prevention of Pollution from Ships, 1973, Annex I "Regulation for prevention of pollution by oil"
NPTL 2: "Report on examination and research on reduction technique of air pollutants emitted from watercrafts, 2009" edited by The Japan Institute of Marine Engineering

### Summary of Invention

### Technical Problem

However, the conventional diesel engine exhaust gas purification equipments described above have the following problems.

That is, the electrical treatment method and equipment for exhaust gas of a diesel engine described in Patent Literature 1 (Figure 27) has the following problems: flow resistance (pressure loss) due to the configuration in which the electrode needle 24 in the discharging/charging unit 22 has a short length in the flowing direction of the exhaust gas flow, the collection plate 23 is disposed in a direction perpendicular to the flowing direction of the exhaust gas flow, and the exhaust gas flow directly abuts on the collection plate 23;since the collection plate 23 is thin and has a short length in the flowing direction of the exhaust gas flow, there is a fear of PM passing though without being collected, and thus PM collection efficiency may not be sufficiently enhanced; and PM once passing though the collection plate 23 is discharged as it is without being again charged by corona discharge and collected.

In the exhaust gas treatment technology for a diesel engine that electrically treats PM in exhaust gas by using corona discharge or the like, the following problems arise.

That is, in marine diesel engines, for example, when the exhaust gas purification equipment described in Patent Literature 1 is used for a large-displacement marine diesel engine which has a significantly large displacement compared with automobile diesel engines using diesel fuel with less sulfur components and uses low-quality fuel equivalent to or inferior to diesel fuel containing a large amount of sulfur components (fuel oil contains sulfur components 500 to 3500 times as much as light oil: according to JIS K2204: 2007 " Diesel fuel"; 0.0010 percent by mass or lower, K2205-1990 "Fuel Oil"; 0.5 percent by mass to 3.5 percent by mass or lower), it is required to overcome a problem in which the sulfur components in the fuel equivalent to or lower than fuel oil in quality are not only contained as SOF in exhaust gas or EGR gas but become sulfate, thereby corroding engine components, in particular, exhaust-related components.

Also, in the electrical treatment method and equipment for exhaust gas of a large-displacement diesel engine which particularly uses fuel equivalent to or lower than fuel oil in quality and from which high-speed and/or large-flow-rate exhaust gas is discharged, described in Patent Literature 2 mentioned above (Figure 28), an EGR system is adopted for the engine to reduce NOx in exhaust gas, and the normal scrubber 40 is installed to the exhaust pipe or EGR piping to effectively remove and more decrease residual components such as sulfur dioxide gas and PM (soot, SOF, and sulfate) that cannot be completely removed by the electrostatic cyclone exhaust gas purification equipment 34, thereby allowing clean exhaust gas and EGR gas to be obtained. Also, EGR gas is cooled and may become a low temperatures, and therefore a high EGR rate can be easily ensured. The combustion temperature in a combustion chamber is decreased to more inhibit the occurrence of nitrogen oxides, and heat dissipation from a cylinder wall surface or the like is decreased to improve fuel efficiency. Furthermore, while the engine components and the exhaust-related components are less corroded by SOx or less promoted to be worn out, treatment water of the normal scrubber 40 also contain SOF components and PM as particles.

On the other hand, in Non-Patent Literature 1, in Chapter 3 "Requirements for machinery spaces of all ships", Part C "Control of discharge of oil", Regulation 15 "Control of discharge of oil", A. "Discharges outside special areas", 2 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million". In B. "Discharges in special areas", 3 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million".

Note herein that "oil" refers to crude oil, fuel oil, and lubricant, "oily" is supposed to be interpreted according to this meaning, and "oily mixtures" refers to mixtures containing oil.

On the other hand, in the marine diesel engine described in Non-Patent Literature 2, by returning EGR gas diverted from exhaust gas to intake air, it is possible to reduce NOx by 80% from the exhaust gas and remove SOx nearly 100% from the EGR gas. However, there is a drawback in which PM in the EGR gas, in particular, sulfate components, cannot be completely removed and remain. Also, regarding the influence of soot and dust passing through the scrubber and sulfur components still contained in PM on the diesel machine body and the system, it is required not only to perform an actual ship test for a long period of time but also to prevent wash water discharged outboard from the scrubber from influencing the environment and ecosystem. In particular, regarding this wash water of the scrubber, waste water treatment is expected to become a large problem, such as removal of environmental pollution components or ecosystem influential components and pH adjustment, together with solution of PM as particles, floating of PM, and solution of SOx. However, in sailing over a long period of time with a large-displacement marine diesel engine, treatment of at least an EGR gas flow, preferably a full amount of an exhaust gas flow including the EGR gas flow, is totally unrealistic if only a scrubber is used, in view of the size of the device (including a storage facility for preventing treated waste water containing oil from being discharged to the ocean). Moreover, in the technology of Patent Literature 1 suggested by the Applicant, even if a cyclone dirt collector is installed in a later stage to collect PM and a normal scrubber is further installed subsequently thereto, oil in the exhaust gas is mixed into the treatment water, and the size of its treatment device (including a storage facility for preventing treated waste water containing oil from being discharged to the ocean) is not a realistic size. Still further, while NOx in exhaust gas can be decreased by the technology of Patent Literature 2 suggested by the Applicant, it is impossible to avoid oil from being mixed into treatment water of the normal scrubber, and the size of its treatment device (including a storage facility for preventing treated waste water containing oil from being discharged to the ocean) is not a realistic size. Note that there are various examples of the normal scrubber, including: a venturi scrubber, a jet scrubber, a cyclone scrubber, and a spray tower as a pressurized water type; and a packed tower and a fluidized bed scrubber as a packed bed type. In any normal scrubber, the exhaust gas flow fiercely makes contact with the surface of the treatment water in a crossing manner, and therefore it is impossible to avoid PM as particles in the exhaust gas from being mixed into the treatment water, and a large number of processes and a large-scale device (including a storage facility for preventing treated waste water containing oil from being discharged to the ocean) are required for water discharging process.

Still further, as a known NOx reduction technology, the SCR scheme using catalytic reaction has been generally known. In this SCR scheme, in the state in which the temperature of exhaust gas of the engine is sufficiently high, if the catalyst is activated, and if the surface of the catalyst is reliably exposed without being covered with soot or the like, the catalyst functions normally and a high degree of NOx reduction can be achieved. However, in a general marine engine, a low-speed engine with a long stroke is in the mainstream, compared with an automobile engine or the like, in order to ensure an improvement in specific fuel consumption. It is often the case that energy of combustion gas in a cylinder is slowly and reliably taken out as motive power for a long time and the temperature of exhaust gas is low due to heat dissipation together with a contact of the combustion gas with the wall surface of the cylinder or the like over a long period of time. Not only during warm-up immediately after the start of the engine but also during steady operation, if the temperature of the catalyst becomes below 300 degrees Celsius, it is often the case that the catalyst do not sufficiently exert its functions and the NOx reduction ratio is insufficient. Moreover, in diesel engines using fuel equivalent to or lower than fuel oil in quality, a problem is pointed out that the catalyst is covered with PM contained in the exhaust gas and is poisoned by sulfur contained in the fuel in large quantity, thereby preventing its NOx purifying function from stably functioning over a long period of time, and an improvement is desired.

In view of the above-described problems in the conventional technology, the present invention reduces NOx in exhaust gas of a large-displacement marine diesel engine which particularly uses fuel equivalent to or lower than fuel oil in quality and from which high-speed and/or large-flow-rate exhaust gas is discharged, and further purifies the exhaust gas by removing SOx with high efficiency while inhibiting mixture of PM into treatment water. Also, with mixture and emulsion of PM into scrubber treatment water being inhibited, SOx is treated with a small number of simple processes such as neutralization and filtration and by a small-sized treatment device with simple control, thereby allowing discharge to the ocean even during sailing in and outside special areas. That is, the present invention is to provide an exhaust gas purification equipment for a marine diesel engine using low-quality fuel such as fuel oil containing high-concentration sulfur component, in which without requiring an expensive, large-sized treatment equipment for scrubber treatment water including a control unit with complex, sophisticated control (including a storage facility for preventing treated waste water containing oil from being discharged to the ocean) and having low installation flexibility, treatment water can be easily managed even with an inexpensive, easy-to-maintain, small-sized facility with high installation flexibility, scrubber-through operation is also possible sometimes, enormous capital investment associated with installation of a large-scale desulfurizing device in oil industry is not required, and therefore fuel cost can be lowered.

### Solution to Problems

An exhaust gas purification equipment for a marine diesel engine using fuel equivalent to or lower than fuel oil in quality according to the present invention is characterized, in that the exhaust gas purification equipment includes: an exhaust gas cooler provided to an exhaust pipe continued to an exhaust manifold of the engine; an electrical precipitation means that removes PM (particular matter) having soluble organic fractions (SOF) and insoluble organic fractions (ISF) contained in the exhaust gas as main components, disposed on a downstream side of the exhaust gas cooler; and a scrubber (hereinafter referred to as a "PM-free scrubber" for the sake of convenience) that removes no PM because treatment water of the scrubber makes a water thin-film layer flowing down along a wall surface constituting the PM-free scrubber and the exhaust gas smoothly flows along a surface of the water thin-film layer without colliding with the treatment water of the scrubber fiercely at an angle that is almost vertical, disposed to an exhaust pipe on a downstream side of the electrical precipitation means.

In an advantageous embodiment of this exhaust gas purification equipment a branching part for causing part of the exhaust gas to branch as EGR gas, provided to the exhaust pipe on a downstream side of the electrical precipitation means to cause the EGR gas to be recirculated to intake air of the engine via an EGR piping continued to the branching part is provided; and the PM-free scrubber that removes no PM because treatment water of the scrubber makes a water thin-film layer flowing down along a wall surface constituting the PM-free scrubber and the exhaust gas or the EGR gas smoothly flows along a surface of the water thin-film layer without colliding with the treatment water of the scrubber fiercely at an angle that is almost vertical, is disposed on an upstream side or a downstream side of the branching part of the exhaust pipe on the downstream side of the electrical precipitation means or the EGR piping system.

In an advantageous embodiment of this exhaust gas purification equipment includes a branching part for causing part of exhaust gas to branch as EGR gas, provided to an exhaust pipe continued to an exhaust manifold of the engine; wherein the exhaust gas cooler is provided to an EGR piping system continued to the branching part; wherein the electrical precipitation means is provided on a downstream side of the exhaust gas cooler to cause the EGR gas to be recirculated to intake air of the engine via the EGR piping system on a downstream side of the electrical precipitation means; and wherein the EGR gas smoothly flows along a surface of the water thin-film layer without colliding with the treatment water of the scrubber fiercely at an angle that is almost vertical, and the PM-free scrubber being provided to the EGR piping system on the downstream side of the electrical precipitation means.

In an advantageous embodiment of this exhaust gas purification equipment the exhaust gas cooler is provided to an exhaust pipe downstream from an exhaust manifold of the engine; wherein a branching part for causing part of the exhaust gas to branch as EGR gas provided to a downstream side of the main PM-free scrubber; and wherein the exhaust gas purification system equipment further comprises additionally to the main PM-free scrubber a sub PM-free scrubber that removes no PM because the treatment water of the scrubber makes a water thin-film layer flowing down along a wall surface constituting the PM-free scrubber and the EGR gas smoothly flows along a surface of the water thin-film layer without colliding with the treatment water of the scrubber fiercely at an angle that is almost vertical, disposed to an EGR piping system continued to the branching part.

In an advantageous embodiment of this exhaust gas purification equipment a high-pressure turbocharger is provided at an upstream stage in a flow direction of exhaust gas and a low-pressure turbocharger provided at a downstream stage in the flow direction of exhaust gas to an exhaust pipe downstream from an exhaust manifold of the engine, as a two-stage supercharging system; wherein the exhaust gas cooler is provided to an exhaust pipe downstream from the low-pressure turbocharger; the electrical precipitation means that removes PM (particular matter) having soluble organic fractions (SOF) and insoluble organic fractions (ISF) contained in the exhaust gas as main components and the main PM-free scrubber that removes no PM because treatment water of the scrubber makes a water thin-film layer flowing down along a wall surface constituting the PM-free scrubber and the exhaust gas smoothly flows along a surface of the water thin-film layer without colliding with the treatment water of the scrubber fiercely at an angle that is almost vertical, is provided on a further downstream side thereof; wherein the exhaust gas purification system further comprises a branching part for causing part of the exhaust gas to branch as EGR gas provided on a downstream side of the main PM-free scrubber; and a sub PM-free scrubber that removes no PM because the treatment water of the scrubber makes a water thin-film layer flowing down along a wall surface constituting the PM-free scrubber and the EGR gas smoothly flows along a surface of the water thin-film layer without colliding with the treatment water of the scrubber fiercely at an angle that is almost vertical, provided to an EGR piping system connected to the branching part, thereby causing the part of the exhaust gas to be recirculated to an upstream or downstream of the low-pressure turbocharger, or a downstream of the high-pressure turbocharger.

In an advantageous embodiment of this exhaust gas purification equipment for a marine diesel engine the main PM-free scrubber that removes no PM because water of the scrubber makes a water thin-film layer flowing down along a wall surface constituting the PM-free scrubber and the exhaust gas smoothly flows along a surface of the water thin-film layer without colliding with the treatment water of the scrubber fiercely at an angle that is almost vertical, disposed to an exhaust pipe on a downstream side of the electrical precipitation means; a branching part for causing part of the exhaust gas to branch as EGR gas provided on a downstream side of the main PM-free-scrubber; and a sub PM-free scrubber that removes no PM and an EGR cooler disposed to an EGR piping system connected to the branching part, so as to cause the part of the exhaust gas to be recirculated to the low-pressure turbocharger and/or a high-pressure turbocharger.

In the exhaust gas purification equipments of the above-described embodiments, the PM-free scrubber that removes no PM has the following preferred mode: a core of a skewed honeycomb structure, in which wave plates and flat plates made of a porous ceramic material with excellent water absorbency and with glass fiber as a framework are alternately multilayered, is arranged perpendicularly to the exhaust pipe and/or the EGR piping system, a water supply unit is provided to an upper portion of the core over a nearly entire length of the core so as to always wet a surface of the core and arranged so that the exhaust gas flow inflows into the honeycomb core from the front side thereof, passes through many tunnel-shaped micro cores, and outflows from the rear side of the honeycomb core, and a tray that receive treatment water obtained by purifying the exhaust gas is provided to a lower portion of the core over a nearly entire length of the core; an upper tank and a lower tank are provided to the exhaust pipe and/or the EGR piping system, and flat plates and/or wave plates are provided between both of the tanks to be perpendicular or diagonal to a vertical direction; or a plurality of lower rolls are disposed to a lower portion of the exhaust pipe and preferably under a water surface of a tray, an endless belt is disposed in a serpentine shape between the lower rolls and a plurality of upper rolls corresponding to the lower rolls, and many wet movable wall surfaces are provided to an exhaust gas flow channel by driving at least one of each of the rolls and causing treatment water to flow down straight below the upper rolls.

### Advantageous Effects of Invention

The exhaust gas purification equipment for a marine diesel engine using fuel equivalent to or lower than fuel oil in quality according to the present invention has the following effects.
1. SOx in the exhaust gas is absorbed and dissolved into the treatment water while flowing along each of the wall surfaces to significantly decrease SOx concentration for discharge by providing, to an exhaust gas passage, preferably an exhaust gas cooler, an electrostatic cyclone exhaust gas purification equipment, and a PM-free scrubber that hardly dissolves or removes PM as well as a thin-film layer of treatment water present (partially falling down) on each of the wall surfaces constituting the PM-free scrubber. In this regard, PM as particles in the exhaust gas only flows along the surface of the treatment water, the exhaust gas hardly collides with the surface of the water thin-film layer of the treatment water of the PM-free scrubber fiercely at an angle that is almost vertical, but smoothly flows along the surface of the water thin-film layer of the PM-free scrubber treatment water without mutual mixture or dissolution for removal, and only SOx is mainly dissolved into the treatment water and only a slight amount of PM as particles is dissolved and contained therein. Therefore, in post treatment of treated waste water of the PM-free scrubber that hardly dissolves or removes PM, SOx can be treated by a small-sized, easily-controllable treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge to the ocean is possible even during sailing in and outside special areas.
2. Since the marine fuel has a large content of sulfur, high-concentration sulfate is contained in exhaust gas. If the exhaust gas is supplied as it is as EGR gas to the combustion chamber, the sulfur components in the exhaust gas are further concentrated, and SOx corrodes or wears out engine components such as a piston, a piston ring, a cylinder, a cylinder head, a supply/exhaust valve, and a valve stem; and exhaust related components such as an exhaust pipe, a muffler, an economizer, and recuperator, thereby impairing durability of the engine and its related components. Since such concerns are eliminated and an improvement can be made, inexpensive materials can be used. According to the device of the present invention, the exhaust gas passage is provided with preferably an exhaust gas cooler, an electrostatic cyclone exhaust gas purification equipment, a PM-free scrubber that hardly dissolves or removes PM, and a branching part to cause EGR gas branched from the branching part to be returned to intake air. With this, of SOx such as sulfur dioxide gas that cannot be completely removed by the electrostatic cyclone exhaust gas purification equipment and PM as particles, SOx is removed by the PM-free scrubber and is hardly contained in both of the exhaust gas and the EGR gas. While the exhaust gas contains SOF components such as n-hexane extract, the contents of PM and SOx such as sulfur dioxide gas are also decreased. Also, by recirculating the EGR gas with decreased SOx, promotion of wearing and corrosion of engine components, and corrosion of exhaust related components can be prevented, extension of a maintenance interval and enhancement of longevity can be achieved, and concerns of impairing durability can be eliminated for improvement. Therefore, an inexpensive material can be used. Also, the combustion temperature in the combustion chamber is decreased to inhibit the occurrence of nitrogen oxides and also clean the exhaust gas. In the treatment water, only SOx is mainly dissolved, and only a small amount of PM as particles is dissolved and contained therein. Therefore, in post treatment of the treatment water, as treated waste water, of this PM-free scrubber which hardly dissolves or removes PM, SOx can be treated by a small-sized, easily-controllable treatment device with a small number of simple processes such as neutralization and filtration. Almost without requiring a function of treating PM by an expensive, large-sized treatment device including a control unit with complex, sophisticated control and having low installation flexibility (including a storage facility for preventing treated waste water containing oil from being discharged to the ocean), scrubber-through operation is possible sometimes, and discharge of treated waste water to the ocean is possible even during sailing in and outside special areas.
3. SOx is removed by the PM-free scrubber to obtain clean EGR gas by providing, to an exhaust pipe, preferably an exhaust gas cooler, an electrostatic cyclone exhaust gas purification equipment, and a branching part to cause part of the exhaust gas to be diverted as EGR gas, and providing further the PM-free scrubber, which dissolves SOx in the EGR gas into its treatment water but hardly dissolves or removes PM, to cause the EGR gas to recirculate to an intake pipe or the like. The contents of PM and nitrogen oxides in the exhaust gas are thus decreased. With the diverted EGR gas temperature brought into contact with treatment water in the PM-free scrubber, the temperature of the EGR gas is decreased, thereby making it easy to ensure a high EGR rate. With a decrease in combustion temperature in the combustion chamber, the occurrence of nitrogen oxides is inhibited, heat dissipation from the cylinder wall surface or the like is decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber to be disposed to the EGR piping system may have a processing performance capable of treating only EGR gas, a small-sized, small-capacity, inexpensive device with a processing performance smaller than that when the entire amount of the exhaust gas is to be treated can be provided. Also, for example, the amount of treatment water is decreased, and sludge is decreased. Scrubber-through operation is also possible sometimes, and the amount of discharge of treated waste water to the ocean during sailing in and outside special areas can also be decreased.
4. A branching part is provided to an exhaust pipe, and part of exhaust gas is diverted as EGR gas. To an EGR piping system, preferably an exhaust gas cooler, an electrostatic cyclone exhaust gas purification equipment, and a PM-free scrubber which dissolves SOx in its treatment water but hardly dissolves or removes PM are disposed, and EGR gas is returned to an intake system while the flow rate of the EGR gas is controlled. Thus, the content of PM in the branched EGR gas is decreased by the electrostatic cyclone exhaust gas purification equipment. By the PM-free scrubber which dissolves SOx in its treatment water but hardly dissolves or removes PM, of SOx such as sulfur dioxide gas not completely removed by the electrostatic cyclone exhaust gas purification equipment and PM as particles, SOx is removed by the PM-free scrubber to become clean EGR gas hardly containing SOx. With the diverted EGR gas temperature further brought into contact with treatment water in the PM-free scrubber to be cooled, the temperature of the EGR gas is decreased, thereby making it easy to ensure a high EGR rate. With a decrease in combustion temperature in the combustion chamber, the occurrence of nitrogen oxides is inhibited, heat dissipation from the cylinder wall surface or the like is decreased to improve specific fuel consumption, and also SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber to be installed to the EGR piping system may have a processing performance capable of treating only EGR gas, the processing performance may be smaller than that when the entire amount of the exhaust gas is to be treated, and thus a small-sized, small-capacity, inexpensive device is enough. Also, the amount of treatment water is decreased, scrubber-through operation is also possible sometimes, and the amount of discharge of treated waste water to the ocean during sailing in and outside special areas can also be decreased. Also, since the electrostatic cyclone exhaust gas purification equipment may have a processing performance capable of treating only the EGR gas, the processing capability may be smaller than that of the exhaust gas purification equipment which treats the entire amount of the exhaust gas, and a small-sized, small-capacity, high-layout-ability, inexpensive device can be provided.
5. To an exhaust pipe, an electrostatic cyclone exhaust gas purification equipment and a main PM-free scrubber are provided, EGR gas is diverted from a backwash of the main PM-free scrubber, and a sub PM-free scrubber is provided to an EGR piping system. With this, the effects described below are further obtained.
   (a). Since SOx contained in the EGR gas can be significantly removed, corrosion and wearing of engine components such as a piston, a piston ring, a cylinder, a cylinder head, and a supply/exhaust valve and valve system can be further decreased to eliminate concerns of impairing durability for improvement. Therefore, an inexpensive material can be used.
   (b). Corrosion of supply/exhaust-related components such as an EGR piping, an EGR valve, a blower, a compressor wheel of a turbocharger, an intercooler, an intake pipe, and an intake manifold can be decreased to eliminate concerns of impairing durability for improvement. Therefore, an inexpensive material can be used.
   (c). Only SOx is dissolved in treatment water of the sub PM-free scrubber, and only a small amount of PM as particles is dissolved and contained therein. Therefore, as with the main PM-free scrubber, water discharging process is easy. Also, for example, treatment water from both scrubbers is collectively treated, and scrubber-through operation is also possible sometimes. Thus, discharge to the ocean is possible during sailing in and outside special areas.
6. In the SCR scheme using catalytic reaction known as known NOx reduction technology, in the state in which the temperature of exhaust gas of the engine is sufficiently high, the catalyst is activated. Also, if the surface of the catalyst is reliably exposed without being covered with soot or the like, the catalyst functions normally and a high degree of NOx reduction can be achieved. However, in a general marine engine, a low-speed engine with a long stroke is in the mainstream, compared with an automobile engine or the like, in order to ensure an improvement in specific fuel consumption. It is often the case that energy of combustion gas in a cylinder is slowly and reliably taken out as motive power, which is kinetic energy, for a long time and the temperature of exhaust gas is low due to heat dissipation of thermal energy with a contact of the combustion gas with the cylinder wall surface or the like over a long period of time. Not only during warm-up immediately after the start of the engine but also during steady operation, it is often the case that the temperature of the catalyst becomes below 300 degrees Celsius, the catalyst cannot sufficiently exert its functions, and the NOx reduction ratio is insufficient. Moreover, in diesel engines using fuel equivalent to or lower than fuel oil in quality, a problem arises that the catalyst is covered with PM contained in the exhaust gas to inhibit a contact with the exhaust gas and a problem arises that the catalyst is poisoned by sulfur contained in the fuel in large quantity, thereby preventing its NOx purifying function and preventing stable reduction of NOx over a long period of time. In the device of the present invention, each component does not have temperature dependency to a degree of SCR, is not influenced by PM in the exhaust gas, is hardly degraded by SOx by using low-quality fuel, can stably exert the exhaust gas purifying function over a long period of time immediately after the start of the engine to achieve a high NOx reduction ratio, and can reliably contribute to environmental protection.

### Brief Description of Drawings

Figure 1 is a block diagram depicting an entire structure of a device of a first example of the present invention.
Figure 2 is a block diagram depicting an entire structure of a device of a second example of the present invention.
Figure 3 is a block diagram depicting an entire structure of a device of a third example of the present invention.
Figure 4 is a block diagram depicting an entire structure of a device of a fourth example of the present invention.
Figure 5 is a block diagram depicting an entire structure of a device of a fifth example of the present invention.
Figure 6 is a block diagram depicting an entire structure of a device of a sixth example of the present invention.
Figure 7 is a block diagram depicting an entire structure of a device of a seventh example of the present invention.
Figure 8 is a block diagram depicting an entire structure of a device of an eighth example of the present invention.
Figure 9 is a block diagram depicting an entire structure of a device of a ninth example of the present invention.
Figure 10 is a block diagram depicting an entire structure of a device of a tenth example of the present invention.
Figure 11 is a block diagram depicting an entire structure of a device of an eleventh example of the present invention.
Figure 12 is a block diagram depicting an entire structure of a device of a twelfth example of the present invention.
Figure 13 is a block diagram depicting an entire structure of a device of a thirteenth example of the present invention.
Figure 14 is a block diagram depicting an entire structure of a device of a fourteenth example of the present invention.
Figure 15 is a block diagram depicting an entire structure of a device of a fifteenth example of the present invention.
Figure 16 is a conceptual diagram depicting a first example of a PM-free scrubber which hardly dissolves or removes PM according to the present invention.
Figure 17 is a conceptual diagram depicting a second example of the PM-free scrubber which hardly dissolves or removes PM as mentioned above.
Figure 18 is a conceptual diagram depicting a third example of the PM-free scrubber which hardly dissolves or removes PM as mentioned above.
Figure 19 is a conceptual diagram depicting a fourth example of the PM-free scrubber which hardly dissolves or removes PM as mentioned above.
Figure 20 is a block diagram depicting an entire structure of a device which exhibits basic characteristics as a comparative example in the examples of the present invention.
Figure 21 is a diagram depicting SOx concentration statuses in the examples of the present invention.
Figure 22 is a diagram depicting NOx concentration statuses in the examples of the present invention.
Figure 23 is a diagram depicting n-hexane values in PM-free scrubber treatment water in the examples of the present invention.
Figure 24 is a diagram depicting transparency of normal scrubber treatment water in a conventional example in the examples of the present invention.
Figure 25 is a diagram depicting transparency of PM-free scrubber treatment water of the present invention in the examples of the present invention.
Figure 26 is a block diagram depicting an entire structure of a diesel engine exhaust gas purification equipment of Conventional Example 1 in the examples of the present invention.
Figure 27 is a schematic diagram depicting an example of a conventional diesel engine exhaust gas purification equipment.

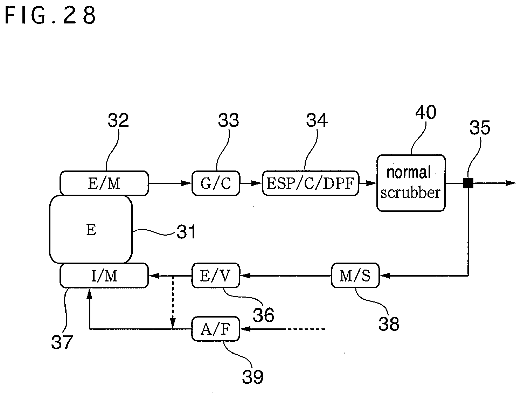

Figure 28 is a block diagram depicting an example of structure of a conventional diesel engine exhaust gas purification equipment using fuel equivalent to or lower than fuel oil in quality.

### Description of Embodiments

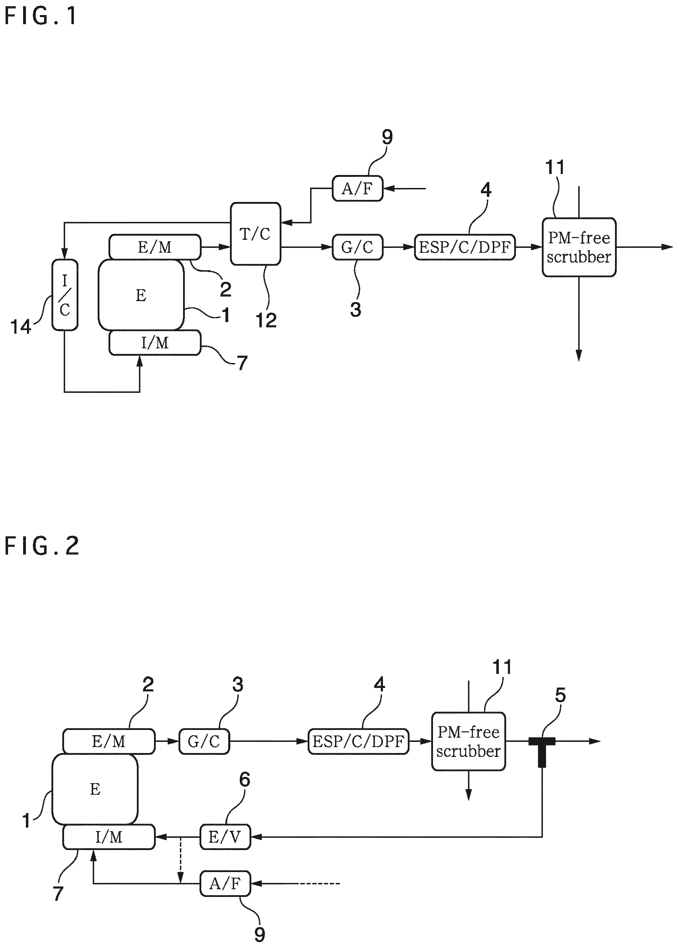

An exhaust gas purification equipment for a marine diesel engine depicted in Figure 1 as a device of a first example of the present invention is configured to have: an exhaust gas cooler (G/C) 3 disposed downstream from a turbine (not depicted) of a turbocharger (T/C) 12 of an exhaust pipe downstream from an exhaust manifold (E/M) 2 of a diesel engine (E) 1 using fuel equivalent to or lower than fuel oil in quality as fuel; an electrostatic cyclone exhaust gas purification equipment (ESP/C/DPF (Diesel Particulate Filter)) 4 disposed downstream from the exhaust gas cooler (G/C) 3; and a PM-free scrubber 11 which dissolves SOx in exhaust gas into treatment water but hardly dissolves or removes PM disposed to a downstream-side piping, via a compressor (not depicted) of a turbocharger (T/C) 12 to an intake pipe downstream from an air filter (A/F) 9 and an intercooler (I/C) 14, and cause outside air to be taken to an intake manifold (I/M) 7 of the engine.

In the case of the above exhaust gas purification equipment configured as depicted in Figure 1, as for exhaust gas driving a turbine wheel (not depicted) of the turbocharger (T/C) 12 and cooled by the exhaust gas cooler, the content of PM (SOF and ISF) in the exhaust gas is reduced by the electrostatic cyclone exhaust gas purification equipment, and then the exhaust gas passes through a PM-free scrubber which hardly dissolves or removes PM. In this exhaust gas purification equipment, in a PM-free scrubber 11 which hardly dissolves or removes PM, by a water thin-film layer of scrubber treatment water present (partially falling down) on the wall surface of each treatment plate configuring the PM-free scrubber, SOx in the exhaust gas flows near the surface of the water thin-film layer of the treatment water on each wall surface to be dissolved from its surface into a water flow that is highly absorbent of SOx. With this dissolution, the concentration of SOx of the exhaust gas flowing near the surface of the water thin-film layer is momentarily decreased. However, SOx, which has an extremely large diffusion coefficient, immediately diffuses and moves at high speed from an adjacent flow with a high concentration in the exhaust gas flow to a portion near the surface of a thin-film layer with a low concentration to be supplied to the surface of the water thin-film layer. With this phenomenon of successively repeating dissolution on the surface of the water thin-film layer and high-speed diffusion from the exhaust gas flow to the surface of the water thin-film layer, SOx is mostly absorbed and attached to be dissolved into the treatment water and discharged, with its concentration drastically reduced. However, since PM as particles in the exhaust gas has a large particle diameter and an extremely small diffusion coefficient, the phenomenon of successively repeating dissolution on the surface of the water thin-film layer and diffusion from the exhaust gas flow to the surface of the water thin-film layer does not occur. Therefore, PM only flowing along the surface of the treatment water. Unlike those of the conventional pressurized water type such as a jet scrubber, a venturi scrubber, and a spray tower and those of the packed bed type such as a packed tower and a fluidized bed scrubber, the exhaust gas hardly collides with the surface of the treatment water of a scrubber fiercely at an angle that is almost vertical, and only smoothly flows along the surface of the water thin-film layer of the PM-free scrubber treatment water. Therefore, mutual mixture does not occur. Most of the exhaust gas just passes through the PM-free scrubber mostly without being absorbed, and is then discharged.

Therefore, in this PM-free scrubber 11 which hardly dissolves or removes PM of the exhaust gas purification equipment, only SOx is mainly dissolved in the treatment water, and just a small amount of PM as particles is dissolved and contained therein. Therefore, in post treatment with the scrubber treatment water of this PM-free scrubber 11 which hardly dissolves or removes PM as treated waste water, SOx can be treated by a small-sized treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge to the ocean is possible even during sailing in and outside special areas.

An exhaust gas purification equipment for a marine diesel engine depicted in Figure 2 as a device of a second example of the present invention is configured to have: an exhaust gas cooler 3 provided to an exhaust pipe downstream from an exhaust manifold 2 of a diesel engine similarly using fuel equivalent to or lower than fuel oil in quality as fuel; an electrostatic cyclone exhaust gas purification equipment 4 and a PM-free scrubber 11 which dissolves SOx in exhaust gas into treatment water but hardly dissolves or removes PM provided downstream from the exhaust gas cooler 3; and a branching part 5 provided downstream thereof to an exhaust pipe to a muffler (not depicted) to connect an EGR piping system which diverts EGR gas, and cause the diverted EGR gas to be returned to an intake pipe system from an intake manifold 7 or an air filter 9 while the diverted EGR gas is subjected to flow-rate control by an EGR valve 6.

In the case of the above exhaust gas purification equipment configured as depicted in Figure 2, as with the device of the first example depicted in Figure 1, the exhaust gas is cleaned. Also, by installing, to the exhaust pipe, the PM-free scrubber 11 which hardly dissolves or removes PM and the EGR piping system which diverts the EGR gas from the branching part 5 of its backwash for return to intake air, of SOx such as sulfur dioxide gas that cannot be completely removed in the electrostatic cyclone exhaust gas purification equipment 4 and PM as particles, SOx is removed by the PM-free scrubber 11 and is hardly contained in the exhaust gas and the EGR gas. The exhaust gas contains SOF components such as n-hexane extracts, but the contents of PM and SOx such as sulfur dioxide gas are decreased. Also, by returning the SOx-decreased EGR gas, wearing and corrosion of engine components and corrosion of exhaust-related components are prevented to achieve extension of a maintenance interval and enhancement of longevity, and concerns of impairing durability can be eliminated for improvement. Therefore, an inexpensive material can be used. Furthermore, the combustion temperature in the combustion chamber is decreased to inhibit the occurrence of nitrogen oxides, also make the exhaust gas clean, and achieve environmental protection.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

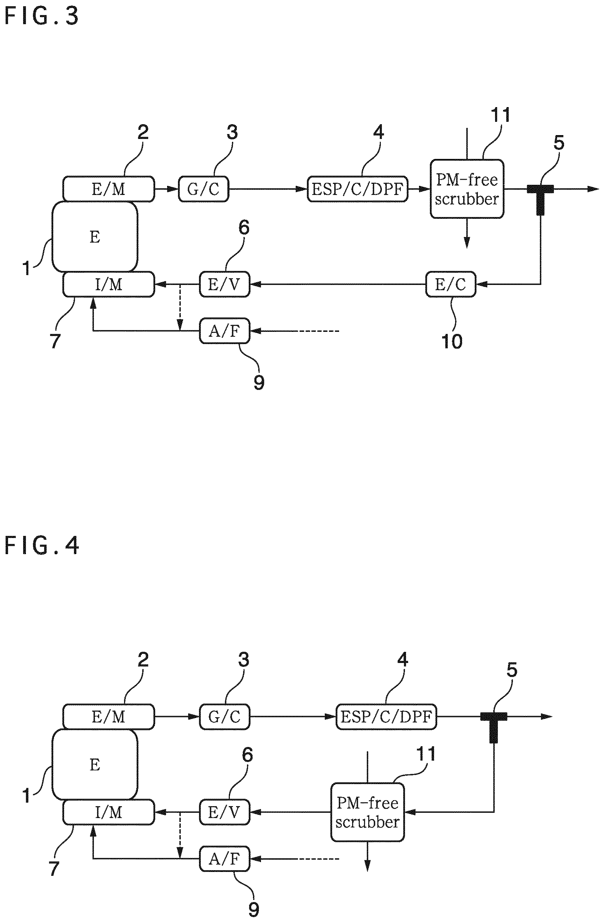

An exhaust gas purification equipment for a marine diesel engine depicted in Figure 3 as a device of a third example of the present invention is configured to have: an exhaust gas cooler 3, an electrostatic cyclone exhaust gas purification equipment 4, and a PM-free scrubber 11 disposed in this order to an exhaust pipe downstream from an exhaust manifold 2 of a diesel engine similarly using fuel equivalent to or lower than fuel oil in quality as fuel; and a branching part 5 provided to an exhaust pipe downstream thereof to connect an EGR piping system which diverts part of exhaust gas as EGR gas to the branching part 5, and cause the EGR gas further cooled by an EGR cooler (E/C) 10 provided to the EGR piping system to be returned to an intake pipe system from an intake manifold 7 or an air filter 9 while the EGR gas is subjected to flow-rate control by an EGR valve 6.

Also in the case of the above exhaust gas purification equipment configured as depicted in Figure 3, the exhaust gas is cleaned. Also, as with the above device of the second example depicted in Figure 2, by installing, to the exhaust pipe, the PM-free scrubber 11 which hardly dissolves or removes PM and the EGR piping system which diverts the EGR gas from the branching part of its backwash, further cools the EGR gas by the EGR cooler 10, and then returns the EGR gas to intake air, of SOx such as sulfur dioxide gas that cannot be completely removed in the electrostatic cyclone exhaust gas purification equipment 4 and PM as particles, SOx is removed by the PM-free scrubber 11 and is hardly contained in both of the exhaust gas and the EGR gas. The exhaust gas slightly contains SOF components such as n-hexane extracts, but the content of SOx such as sulfur dioxide gas in PM is decreased. Also, by returning the SOx-decreased EGR gas further cooled by the EGR cooler to allow a high EGR rate to be easily ensured, the combustion temperature in the combustion chamber is further decreased to further inhibit the occurrence of nitrogen oxides. Also, heat dissipation from the cylinder wall surface or the like is decreased to improve specific fuel consumption. Furthermore, wearing and corrosion of engine components and corrosion of exhaust-related components are prevented to achieve extension of a maintenance interval and enhancement of longevity, and concerns of impairing durability can be eliminated for improvement. Therefore, an inexpensive material can be used. Furthermore, the combustion temperature in the combustion chamber is decreased to further inhibit the occurrence of nitrogen oxides, also make the exhaust gas clean, and achieve environmental protection.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a marine diesel engine depicted in Figure 4 as a device of a fourth example of the present invention is configured to have: an exhaust gas cooler 3 and an electrostatic cyclone exhaust gas purification equipment 4 disposed to an exhaust pipe downstream from an exhaust manifold 2 of a diesel engine similarly using fuel equivalent to or lower than fuel oil in quality as fuel; a branching part 5 provided to an exhaust pipe downstream of the electrostatic cyclone exhaust gas purification equipment 4 to connect an EGR piping system which diverts part of exhaust gas as EGR gas to the branching part 5; and a PM-free scrubber 11 which dissolves SOx in the EGR gas into its treatment water but hardly dissolves or removes PM disposed to the EGR piping system, and further cause the EGR gas to be returned to an intake pipe system from an intake manifold 7 or an air filter 9 while the EGR gas is subjected to flow-rate control by an EGR valve 6.

In the case of the above exhaust gas purification equipment configured as depicted in Figure 4, the exhaust gas is cleaned. Also, unlike the above device of the third example depicted in Figure 3, by installing the PM-free scrubber 11 which dissolves SOx in the EGR gas into its treatment water but hardly dissolves or removes PM to the EGR piping system, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. As for the exhaust gas, with treatment by the electrostatic cyclone exhaust gas purification equipment 4 and return of the EGR gas, the contents of PM and nitrogen oxides are decreased. However, since scrubber treatment is not performed, the exhaust gas contains SOx, but with the diverted EGR gas temperature smoothly flowing along the surface of the water thin-film layer of the scrubber treatment water in the PM-free scrubber 11, the temperature of the EGR gas is decreased, thereby making it easy to ensure a high EGR rate. Also, with a decrease in combustion temperature in the combustion chamber, the occurrence of nitrogen oxides is inhibited, heat dissipation from the cylinder wall surface or the like is decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber 11 to be installed to the EGR piping system may have a processing performance capable of treating only EGR gas, the processing performance may be smaller than that of the PM-free scrubbers 11 of the above devices of the first to third examples which treat the entire amount of the exhaust gas, and thus a small-sized, small-capacity, inexpensive device can be provided. Also, the amount of treatment water is decreased, sludge is decreased, and the amount of discharge of treated waste water to the ocean during sailing can also be decreased.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

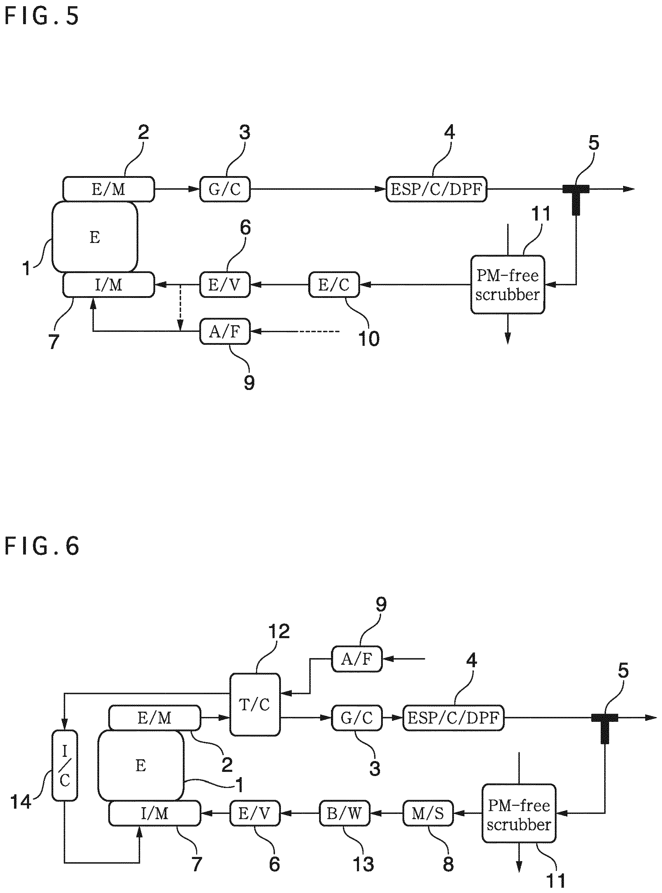

An exhaust gas purification equipment for a marine diesel engine depicted in Figure 5 as a device of a fifth example of the present invention is configured to have: an exhaust gas cooler 3 and an electrostatic cyclone exhaust gas purification equipment 4 disposed to an exhaust pipe downstream from an exhaust manifold 2 of a diesel engine 1 similarly using fuel equivalent to or lower than fuel oil in quality as fuel; a branching part 5 to an exhaust pipe downstream from the electrostatic cyclone exhaust gas purification equipment 4 to connect an EGR piping system which diverts part of exhaust gas as EGR gas to the branching part 5; a PM-free scrubber 11 which dissolves SOx in the EGR gas into its treatment water but hardly dissolves or removes PM disposed to the EGR piping system; and an EGR cooler 10 on a downstream side of the PM-free scrubber 11, and cause the EGR gas further cooled by the EGR cooler 10 to be returned to an intake pipe system from an intake manifold 7 or an air filter while the EGR gas is subjected to flow-rate control by an EGR valve 6.

In the case of the above exhaust gas purification equipment configured as depicted in Figure 5, the exhaust gas is cleaned. Also, as with the above device of the fourth example depicted in Figure 4, by installing, to the EGR piping system, the PM-free scrubber 11 which dissolves SOx in the EGR gas into its treatment water but hardly dissolves or removes PM and the EGR cooler 10, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean at low temperature. As for the exhaust gas, with treatment by the electrostatic cyclone exhaust gas purification equipment 4 and return of the EGR gas, the contents of PM and nitrogen oxides are decreased. However, since scrubber treatment is not performed, the exhaust gas contains SOx, but with the diverted EGR gas temperature brought into contact with the treatment water in the PM-free scrubber 11 and then further cooled by the EGR cooler 10, the temperature of the EGR gas is decreased more than the fourth example, thereby making it easy to ensure a high EGR rate. With a further decrease in combustion temperature in the combustion chamber, the occurrence of nitrogen oxides is further inhibited. Also, heat dissipation from the cylinder wall surface or the like is decreased to further improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used.

Since the PM-free scrubber 11 to be installed to the EGR piping system may have a processing performance capable of treating only EGR gas, the processing performance may be smaller than that of the PM-free scrubbers of the above devices of the first to third examples which treat the entire amount of the exhaust gas, and thus a small-sized, small-capacity, inexpensive device can be provided. Also, the amount of treatment water is decreased, sludge is decreased, and the amount of discharge of treated waste water to the ocean during sailing can also be decreased.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a marine diesel engine depicted in Figure 6 as a device of a sixth example of the present invention is configured to have: a turbocharger (T/C) 12 provided downstream from an exhaust manifold 2 of a diesel engine 1 using fuel equivalent to or lower than fuel oil in quality as fuel; an exhaust gas cooler 3 and an electrostatic cyclone exhaust gas purification equipment 4 disposed to an exhaust pipe downstream from a turbine wheel (not depicted) of the turbocharger 12; a branching part 5 provided to an exhaust pipe downstream from the electrostatic cyclone exhaust gas purification equipment 4 to connect an EGR piping system which diverts part of exhaust gas as EGR gas to the branching part 5; a PM-free scrubber 11 which dissolves SOx in the EGR gas into its treatment water but hardly dissolves or removes PM and a steam separator 8 disposed to the EGR piping system; and a blower (B/W) 13 which increases pressure of the EGR gas for supply and pumping provided downstream thereof, and causes the EGR gas to be returned to the intake manifold 7 pressure-increased by a compressor wheel (not depicted) of the turbocharger 12 while the EGR gas is subjected to flow-rate control by an EGR valve 6. Also, while the intake manifold 7 is the position to which the EGR gas is returned in the device of the present example, since the EGR gas is pressure-increased by the blower (B/W) 13, return can be made at a desired high EGR rate at any position (such as before or after an intercooler) of the intake piping system. Note that while the steam separator 8 is installed downstream from the PM-free scrubber 11, this prevents a problem in which, when the EGR gas includes a water droplet, for example, when treatment water of the PM-free scrubber 11 is mixed into the EGR gas, this water droplet is dispersed in the blower to corrode a component, and also prevents, for example, the water droplet from flowing into the engine combustion chamber to be rapidly expanded to become at extremely high pressure to adversely affect combustion and damage the engine.

In the case of the above exhaust gas purification equipment configured as depicted in Figure 6, the exhaust gas is cleaned. Also, as with the above device of the fourth example depicted in Figure 4, by installing, to the EGR piping system, the PM-free scrubber 11 which dissolves SOx in the EGR gas into its treatment water but hardly dissolves or removes PM and the steam separator 8, and the blower 13, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. As for the exhaust gas, with treatment by the electrostatic cyclone exhaust gas purification equipment 4 and return of the EGR gas, the contents of PM and nitrogen oxides are decreased. However, since scrubber treatment is not performed, the exhaust gas contains SOx, but with the diverted EGR gas temperature brought into contact with the scrubber treatment water in the PM-free scrubber 11, the temperature of the EGR gas is decreased. Together with pumping by the blower 13, a high EGR rate is easily ensured. Also, with a decrease in combustion temperature in the combustion chamber, the occurrence of nitrogen oxides is inhibited. Furthermore, heat dissipation from the cylinder wall surface or the like is decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used.

Since the PM-free scrubber 11 to be installed to the EGR piping system may have a processing performance capable of treating only EGR gas, the processing performance may be smaller than that of the PM-free scrubbers 11 of the above devices of the first to third examples which treat the entire amount of the exhaust gas, and thus a small-sized, small-capacity, inexpensive device can be provided. Also, the amount of treatment water is decreased, sludge is decreased, and the amount of discharge of treated waste water to the ocean during sailing can also be decreased.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

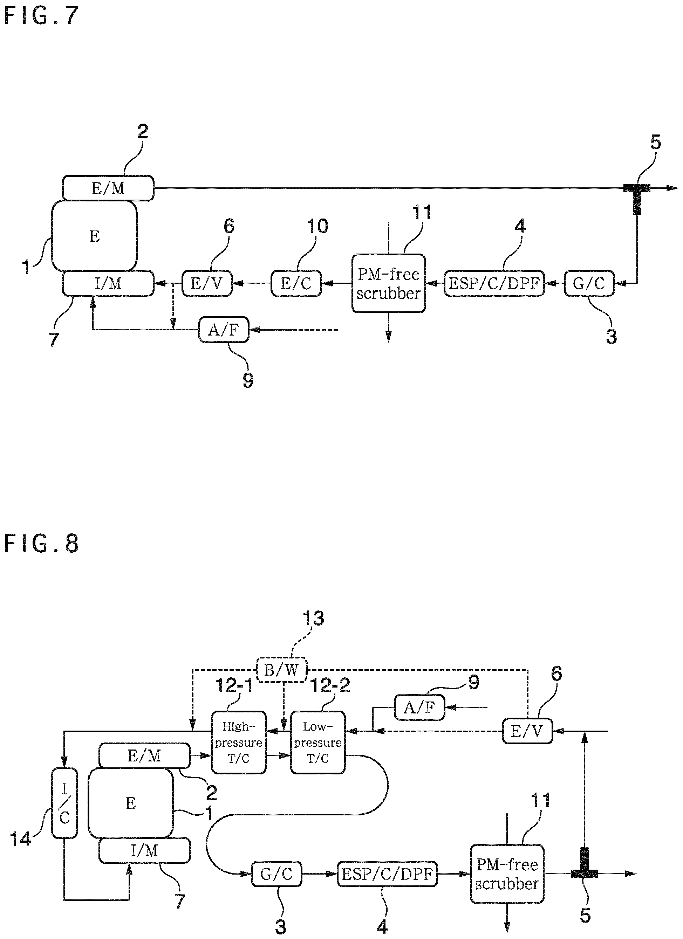

An exhaust gas purification equipment for a diesel engine depicted in Figure 7 as a device of a seventh example of the present invention is configured to have: a branching part 5 provided to an exhaust pipe downstream from an exhaust manifold 2 of a diesel engine 1 similarly using fuel equivalent to or lower than fuel oil in quality as fuel to connect an EGR piping system which diverts part of exhaust gas as EGR gas to the branching part 5; an exhaust gas cooler 3 and an electrostatic cyclone exhaust gas purification equipment 4 disposed to the EGR piping system; a PM-free scrubber 11 which dissolves SOx in the EGR gas into its treatment water but hardly dissolves or removes PM disposed downstream of the electrostatic cyclone exhaust gas purification equipment 4; and an EGR cooler 10 and an EGR valve 6 disposed downstream from the PM-free scrubber 11, and causes the EGR gas to be returned to an intake pipe system from an intake manifold 7 or an air filter 9 while the EGR gas is subjected to flow-rate control by the EGR valve 6.

In the case of the above exhaust gas purification equipment configured as depicted in Figure 7, unlike the devices of the first to sixth examples, PM in the exhaust gas is not removed. However, with return of the EGR gas, the content of nitrogen oxides is decreased, and the branched EGR gas is cooled by the exhaust gas cooler 3, and the content of PM (SOF and ISF) in the EGR gas is efficiently decreased by the electrostatic cyclone exhaust gas purification equipment 4. Furthermore, by installing the PM-free scrubber 11 which dissolves SOx in the EGR gas into its treatment water but hardly dissolves or removes PM, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. Furthermore, with the diverted EGR gas temperature brought into contact with the treatment water in the PM-free scrubber 11 and then further cooled by the EGR cooler 10, the temperature of the EGR gas is further decreased, thereby making it easier to ensure a high EGR rate. With a further decrease in combustion temperature in the combustion chamber, the occurrence of nitrogen oxides is inhibited. Also, heat dissipation from the cylinder wall surface or the like is decreased to further improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber 11 to be installed to the EGR piping system may have a processing performance capable of treating only EGR gas, the processing performance may be smaller than that of the PM-free scrubbers 11 of the above devices of the first to third examples which treat the entire amount of the exhaust gas, and thus a small-sized, small-capacity, inexpensive device can be provided. Also, the amount of scrubber treatment water is decreased, sludge is decreased, and the amount of discharge of treated waste water to the ocean during sailing can also be decreased. Also, since the electrostatic cyclone exhaust gas purification equipment may have a processing performance capable of treating only EGR gas, the processing performance may be smaller than that of the exhaust gas purification equipments of the above devices of the first to third examples which treat the entire amount of the exhaust gas, and thus a small-sized, small-capacity, high-layout-ability, inexpensive device can be provided.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a diesel engine depicted in Figure 8 as a device of an eighth example of the present invention is configured to have: as a two-stage supercharging system, a high-pressure turbocharger 12-1 disposed at a upstream stage in a flow direction of exhaust gas and a low-pressure turbocharger 12-2 disposed at a downstream stage therein, downstream from an exhaust manifold 2 of a diesel engine 1 similarly using fuel equivalent to or lower than fuel oil in quality as fuel; an exhaust gas cooler 3 provided to an exhaust pipe downstream from the low-pressure turbocharger 12-2; an electrostatic cyclone exhaust gas purification equipment 4 and a PM-free scrubber 11 which hardly dissolves or removes PM provided downstream thereof; and an EGR piping system which diverts EGR gas connected downstream thereof to a branching part 5 provided to an exhaust pipe to a muffler (not depicted), and cause the EGR gas together with intake air from an air filter 9 to be pumped by a blower 13 to an intake pipe at a low-pressure position upstream from a compressor wheel (not depicted) of the low-pressure turbocharger 12 or an intake pipe at an intermediate-pressure position between the high-pressure turbocharger 12-1 and the low-pressure turbocharger 12-2 or to be pumped by a blower 13 to an intake pipe at a high-pressure position downstream from a compressor wheel (not depicted) of the high-pressure turbocharger 12-1, to be returned, while the EGR gas is subjected to flow-rate control by an EGR valve 6.

In the case of the above exhaust gas purification equipment configured as depicted in Figure 8, as with the above device of the second example depicted in Figure 2, the exhaust gas is cleaned. Also, by installing, to the exhaust pipe, the PM-free scrubber 11 which hardly dissolves or removes PM and the EGR piping system which diverts the EGR gas from the branching part 5 downstream thereof for return to intake air, of SOx such as sulfur dioxide gas that cannot be completely removed in the electrostatic cyclone exhaust gas purification equipment 4 and PM as particles, SOx is removed by the PM-free scrubber 11 and is hardly contained in the exhaust gas and the EGR gas. The exhaust gas slightly contains SOF components such as n-hexane extracts, but the contents of PM and SOx such as sulfur dioxide gas are decreased. Also, by returning the EGR gas with PM and SOx decreased, promotion of wearing and corrosion of engine components and corrosion of exhaust-related components are prevented to achieve extension of a maintenance interval and enhancement of longevity, and concerns of impairing durability can be eliminated for improvement. Therefore, an inexpensive material can be used. Furthermore, the combustion temperature in the combustion chamber is decreased to inhibit the occurrence of nitrogen oxides and make the exhaust gas clean. Still further, with the engine two-stage supercharged, the supercharge pressure is increased to improve an excess air coefficient and so forth to improve combustion, fuel consumption is reduced, and the EGR rate can be increased over a wide operation region. PM at a stage of being discharged to the exhaust manifold 2 is also reduced, thereby obtaining an effect that a desired exhaust gas purifying capability can be ensured and kept.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

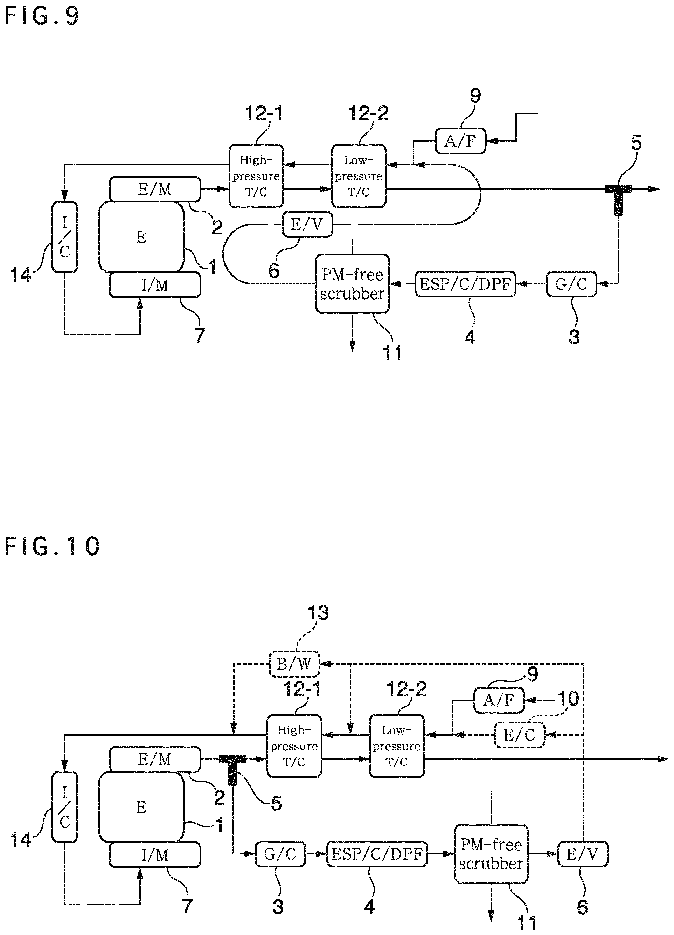

An exhaust gas purification equipment for a marine diesel engine depicted in Figure 9 as a device of a ninth example of the present invention is configured to have: as a two-stage supercharging system, a high-pressure turbocharger 12-1 disposed at a upstream stage in a flow direction of exhaust gas and a low-pressure turbocharger 12-2 disposed at a downstream stage therein, downstream from an exhaust manifold of a diesel engine 1 similarly using fuel equivalent to or lower than fuel oil in quality as fuel; a branching part 5 provided to an exhaust pipe downstream from the low-pressure turbocharger 12-2 to connect an EGR piping system which diverts part of the exhaust gas as EGR gas to the branching part 5; and an exhaust gas cooler 3, an electrostatic cyclone exhaust gas purification equipment 4, a PM-free scrubber 11 which hardly dissolves or removes PM, and an EGR valve 6 disposed in this order to the EGR piping system, and cause the EGR gas together with intake air from an air filter 9 to be returned to an intake pipe system upstream from a compressor wheel (not depicted) of the low-pressure turbocharger 12-2 while the EGR gas is subjected to flow-rate control by the EGR valve 6.

In the case of the above exhaust gas purification equipment configured as depicted in Figure 9, as with the above device of the seventh example depicted in Figure 7, PM in the exhaust gas is not removed, but the content of nitrogen oxides is decreased by return of the EGR gas. The branched EGR gas is cooled by the exhaust gas cooler 3, and the content of PM (SOF and ISF) in the EGR gas is efficiently decreased by the electrostatic cyclone exhaust gas purification equipment 4. Furthermore, by installing the PM-free scrubber 11 which dissolves SOx in the EGR gas into its treatment water but hardly dissolves or removes PM, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. Still further, with the diverted EGR gas temperature brought into contact with the treatment water in the PM-free scrubber 11 to be cooled, the temperature of the EGR gas is decreased, thereby making it easy to ensure a high EGR rate. Also, with a decrease in combustion temperature in the combustion chamber, the occurrence of nitrogen oxides is inhibited. Also, heat dissipation from the cylinder wall surface or the like is decreased to improve specific fuel consumption. Furthermore, with a decreased in SOx contained in the EGR gas, concerns of impairing durability of the engine and related components with engine components and exhaust-related components promoted to be worn or corroded by SOx can be eliminated for improvement. Therefore, an inexpensive material can be used. Note that since the PM-free scrubber 11 to be installed to the EGR piping system may have a processing performance capable of treating only EGR gas, the processing performance may be smaller than that of the PM-free scrubbers 11 of the above devices of the first to third examples which treat the entire amount of the exhaust gas, and thus a small-sized, small-capacity, inexpensive device can be provided. Also, the amount of scrubber treatment water is decreased, sludge is decreased, and the amount of discharge of treated waste water to the ocean during sailing can also be decreased. Also, since the electrostatic cyclone exhaust gas purification equipment may have a processing performance capable of treating only EGR gas, the processing performance may be smaller than that of the exhaust gas purification equipments of the above devices of the first to third examples which treat the entire amount of the exhaust gas, and thus a small-sized, small-capacity, high-layout-ability, inexpensive device can be provided. Still further, with the engine two-stage supercharged, the supercharge pressure is increased to improve an excess air coefficient and so forth to improve combustion, fuel consumption is improved, and the EGR rate can be increased over a wide operation region. PM at a stage of being discharged to the exhaust manifold 2 is also reduced, thereby obtaining an effect that a desired exhaust gas purifying capability can be ensured and kept.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a diesel engine depicted in Figure 10 as a device of a tenth example of the present invention is configured to have: as a two-stage supercharging system, a high-pressure turbocharger 12-1 disposed at a upstream stage in a flow direction of exhaust gas and a low-pressure turbocharger 12-2 disposed at a downstream stage therein, to a diesel engine 1 similarly using fuel equivalent to or lower than fuel oil in quality as fuel; a branching part provided to an exhaust pipe upstream from the high-pressure turbocharger 12-1 to connect an EGR piping system which diverts part of the exhaust gas as high-pressure EGR gas to the branching part 5; and an exhaust gas cooler 3, an electrostatic cyclone exhaust gas purification equipment 4, a PM-free scrubber 11 which hardly dissolves or removes PM, and an EGR valve 6 disposed in this order to the EGR piping system, and cause the EGR gas together with intake air from an air filter to be returned for supply to a low-pressure position of an intake pipe upstream from a compressor wheel (not depicted) of the low-pressure turbocharger 12-2, or to be returned for supply to an intermediate-pressure position between the high-pressure turbocharger 12-1 and the low-pressure turbocharger 12-2, or to be pumped by, preferably a blower, for return to a high-pressure position of an intake pipe downstream from a compressor wheel (not depicted) of the high-pressure turbocharger 12-1, while the EGR gas is subjected to flow-rate control by the EGR valve 6. That is, the device of the present example is configured so that the EGR gas is precooled in the EGR gas piping system branched from an upstream position of a turbine wheel (not depicted) of the high-pressure turbocharger 12-1 straight below the manifold, is treated by the PM-free scrubber after electrostatic cyclone processing, is cooled as desired by an EGR cooler 10 while the EGR gas is subjected to flow-rate control by the EGR valve 6, and is then returned.

Also in the case of the above exhaust gas purification equipment configured as depicted in Figure 10, as with the above-configured exhaust gas purification equipment depicted in Figure 9, PM in the exhaust gas is not removed, but the content of nitrogen oxides is decreased with return of the EGR gas. The branched high-temperature, high-pressure EGR gas is cooled by the exhaust gas cooler 3, and the content of PM (SOF and ISF) in the EGR gas is efficiently decreased by the electrostatic cyclone exhaust gas purification equipment 4. Furthermore, by installing the PM-free scrubber 11 which dissolves SOx in the EGR gas into its treatment water but hardly dissolves or removes PM, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. Still further, with the diverted EGR gas temperature smoothly flowing along the surface of the water thin-film layer of the scrubber treatment water in the PM-free scrubber 11 and being cooled by the EGR cooler 10 provided as desired, the temperature of the EGR gas is decreased, thereby making it easy to ensure a high EGR rate. Also, with a further decrease in combustion temperature in the combustion chamber, the occurrence of nitrogen oxides is further inhibited, heat dissipation from the cylinder wall surface or the like is further decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber 11 to be installed to the EGR piping system may have a processing performance capable of treating only EGR gas, the processing performance may be smaller than that of the PM-free scrubbers of the above devices of the first to third examples which treat the entire amount of the exhaust gas, and thus a small-sized, small-capacity, inexpensive device can be provided. Also, the amount of scrubber treatment water is decreased, sludge is decreased, and the amount of discharge of treated waste water to the ocean during sailing can also be decreased. Also, since the electrostatic cyclone exhaust gas purification equipment 4 may also have a processing performance capable of treating only EGR gas, the processing performance may be smaller than that of the exhaust gas purification equipments of the above devices of the first to third examples which treat the entire amount of the exhaust gas, and thus a small-sized, small-capacity, high-layout-ability, inexpensive device can be provided. Furthermore, even if the pressure in the intake pipe is increased by the compressor, high-pressure exhaust gas upstream from the high-pressure turbocharger 12-1 is branched. Therefore, the blower 13 is installed as required to the EGR piping to increase the EGR gas for pumping and supply, thereby supplying a more accurate amount of EGR gas to allow a high EGR rate to be ensured. Also, with the engine two-stage supercharged, the supercharge pressure is increased to improve an excess air coefficient and so forth to improve combustion, fuel consumption is reduced, and the EGR rate can be increased over a wide operation region. PM at a stage of being discharged to the exhaust manifold 2 is also reduced, thereby obtaining an effect that a desired exhaust gas purifying capability can be ensured and kept.

Furthermore, in the PM-free scrubber which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

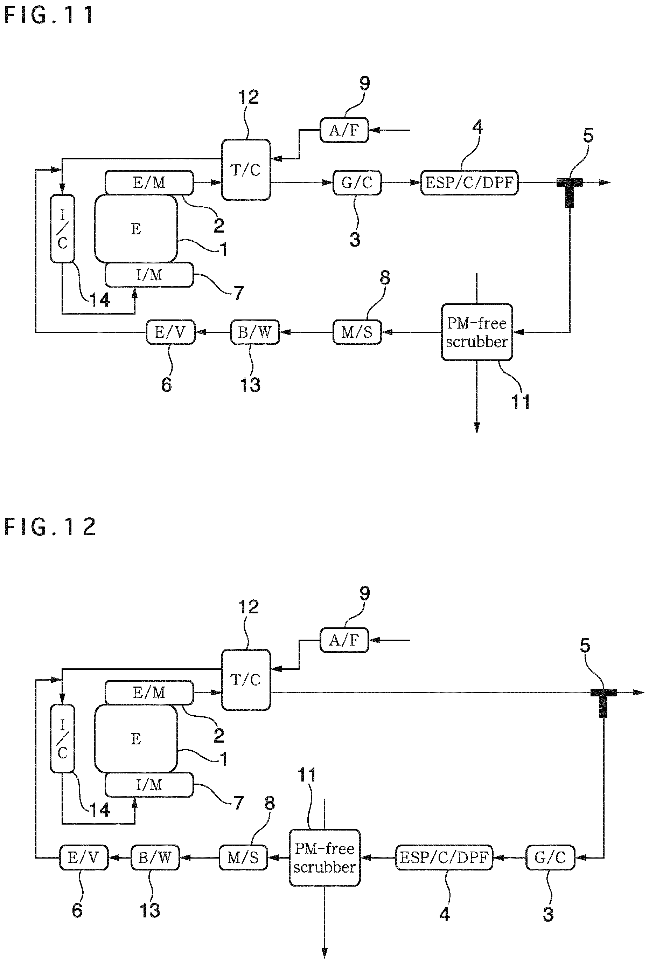

An exhaust gas purification equipment for a marine diesel engine depicted in Figure 11 as a device of an eleventh example of the present invention is configured to have: a turbocharger 12 disposed downstream from an exhaust manifold 2 of a diesel engine 1 using fuel equivalent to or lower than fuel oil in quality as fuel; an exhaust gas cooler 3 and an electrostatic cyclone exhaust gas purification equipment 4 disposed to an exhaust pipe downstream from a turbine wheel (not depicted) of the turbocharger 12; have a branching part 5 provided to an exhaust pipe downstream from the electrostatic cyclone exhaust gas purification equipment 4 to connect an EGR piping system which diverts part of the exhaust gas as EGR gas to the branching part 5; and a PM-free scrubber 11 which hardly dissolves or removes PM, a steam separator 8, a blower (B/W) 13 which increases the pressure of the EGR gas for supply and pumping, and an EGR valve 6 disposed in this order to the EGR piping system, and causes the EGR gas to be returned to an intake pipe before an intercooler while the EGR gas is subjected to flow-rate control by the EGR valve 6. That is, the device of the present example is configured so that the exhaust gas after the turbine wheel (not depicted) of the turbocharger 12 is accelerated is precooled, only the EGR gas diverted from the exhaust gas after the electrostatic cyclone exhaust gas purifying treatment is treated by the PM-free scrubber 11 which hardly dissolves or removes PM and is then pumped by the blower (B/W) 13 via the steam separator 8, and an accurate amount of the EGR gas is returned to the intake pipe before the intercooler. Also, the steam separator 8 is installed downstream from the PM-free scrubber 11. This prevents a problem in which, when the EGR gas includes a water droplet, for example, when dew condensation water or the like occurring due to cooling with scrubber treatment water of the PM-free scrubber 11 is mixed into the EGR gas, this water droplet is dispersed in the blower to corrode a component, and also prevents, for example, the water droplet from flowing into the engine combustion chamber to be rapidly expanded to become at extremely high pressure to adversely affect combustion and damage the engine.

In the case of the above exhaust gas purification equipment configured as depicted in Figure 11, the device is identical to the device of the sixth example of Figure 6, except that the EGR gas is returned to the intake pipe supercharged by a compressor wheel (not depicted) of the turbocharger 12 before the intercooler to become at high pressure. By installing, to the EGR piping system, the PM-free scrubber 11 which dissolves SOx in the EGR gas into its treatment water but hardly dissolves or removes PM, the steam separator 8, and the blower 13, of SOx such as sulfur dioxide gas that cannot be fully removed by the electrostatic cyclone exhaust gas purification equipment 4 and PM as particles, SOx is removed by the PM-free scrubber 11 and is hardly contained in the EGR gas, and the EGR gas becomes clean. As for the exhaust gas, with treatment by the electrostatic cyclone exhaust gas purification equipment 4 and return of the EGR gas, the contents of PM and nitrogen oxides are decreased, but SOx is contained because PM-free scrubber treatment is not performed. With the diverted EGR gas temperature brought into contact with treatment water in the PM-free scrubber 11, the temperature of the EGR gas is decreased. Together with pumping by the blower, a high EGR rate is easily ensured. Also, with a decrease in combustion temperature in the combustion chamber, the occurrence of nitrogen oxides is inhibited. Furthermore, heat dissipation from the cylinder wall surface or the like is decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used.

Since the PM-free scrubber 11 to be installed to the EGR piping system may have a processing performance capable of treating only EGR gas, the processing performance may be smaller than that of the PM-free scrubbers of the above devices of the first to third examples which treat the entire amount of the exhaust gas, and thus a small-sized, small-capacity, inexpensive device can be provided. Also, the amount of scrubber treatment water is decreased, sludge is decreased, and the amount of discharge of treated waste water to the ocean during sailing can also be decreased.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a marine diesel engine depicted in Figure 12 as a device of a twelfth example of the present invention is configured to have: a turbocharger 12 disposed to an exhaust pipe downstream from an exhaust manifold 2 of a diesel engine 1 using fuel equivalent to or lower than fuel oil in quality as fuel; a branching part 5 provided to an exhaust pipe downstream from the turbocharger 12 to connect an EGR piping system which diverts part of the exhaust gas as EGR gas to the branching part 5; an exhaust gas cooler 3 and an electrostatic cyclone exhaust gas purification equipment 4 disposed to the EGR piping; a PM-free scrubber 11 which hardly dissolves or removes PM in the EGR gas installed downstream from the electrostatic cyclone exhaust gas purification equipment 4; and a steam separator 8, a blower (B/W) 13, and an EGR valve 6 disposed in this order downstream from the PM-free scrubber, and cause the EGR gas to be returned to an intake pipe before an intercooler while the EGR gas is subjected to flow-rate control by the EGR valve 6. That is, the device of the present example is configured so that the EGR gas is precooled in the EGR gas piping system, is treated by the PM-free scrubber 11 which hardly dissolves or removes PM after electrostatic cyclone processing, and is pumped by the blower 13 via the steam separator 8 to be returned to the intake pipe before the intercooler. Also, the steam separator 8 is installed downstream from the PM-free scrubber 11. This prevents a problem in which, when the EGR gas includes a water droplet, for example, when dew condensation water or the like occurring due to cooling with scrubber treatment water of the PM-free scrubber 11 is mixed into the EGR gas, this water droplet is dispersed in the blower to corrode a component, and also prevents, for example, the water droplet from flowing into the engine combustion chamber to be rapidly expanded to become at extremely high pressure to adversely affect combustion and damage the engine.

In the case of the above exhaust gas purification equipment configured as depicted in Figure 12, unlike the above device of the eleventh example of Figure 11, PM in the exhaust gas is not actively removed only with a decrease by improvement in combustion of turbo supercharge, but the content of nitrogen oxides is decreased by return of the EGR gas, the branched EGR gas is cooled by the exhaust gas cooler, and the content of PM (SOF and ISF) in the EGR gas is decreased by the electrostatic cyclone exhaust gas purification equipment 4. By further installing the PM-free scrubber 11 which dissolves SOx in the EGR gas into its treatment water but hardly dissolves or removes PM, of SOx such as sulfur dioxide gas that cannot be completely removed in the electrostatic cyclone exhaust gas purification equipment 4 and PM as particles, SOx is removed by the PM-free scrubber 11 and is hardly contained in the EGR gas, and the EGR gas becomes clean. Still further, with the diverted EGR gas temperature brought into contact with scrubber treatment water in the PM-free scrubber 11 to be cooled, the temperature of the EGR gas is decreased. Together with pumping by the blower 13, a high EGR rate is easily ensured. Also, with a decrease in combustion temperature in the combustion chamber, the occurrence of nitrogen oxides is inhibited. Furthermore, heat dissipation from the cylinder wall surface or the like is decreased to improve specific fuel consumption, and SOx contained in the EGR gas is decreased. With this, concerns of impairing durability of the engine and related components with engine components and exhaust-related components promoted to be worn or corroded by SOx can be eliminated for improvement. Therefore, an inexpensive material can be used. Note that since the PM-free scrubber 11 to be installed to the EGR piping system may have a processing performance capable of treating only EGR gas, the processing performance may be smaller than that of the PM-free scrubbers of the above devices of the first to third examples which treat the entire amount of the exhaust gas, and thus a small-sized, small-capacity, inexpensive device can be provided. Also, the amount of scrubber treatment water is decreased, sludge is decreased, and the amount of discharge of treated waste water as scrubber treatment water to the ocean during sailing can also be decreased. Also, since the electrostatic cyclone exhaust gas purification equipment 4 may also have a processing performance capable of treating only EGR gas, the processing performance may be smaller than that of the exhaust gas purification equipments of the above devices of the first to third examples which treat the entire amount of the exhaust gas, and thus a small-sized, small-capacity, high-layout-ability, inexpensive device can be provided.

Furthermore, in the PM-free scrubber 11 which hardly dissolves or removes PM also in this exhaust gas purification equipment, only SOx is mainly dissolved in the scrubber treatment water and just a small amount of PM as particles is dissolved and contained therein. Therefore, in post treatment with scrubber treatment water of this PM-free scrubber 11 which hardly dissolves or removes PM as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

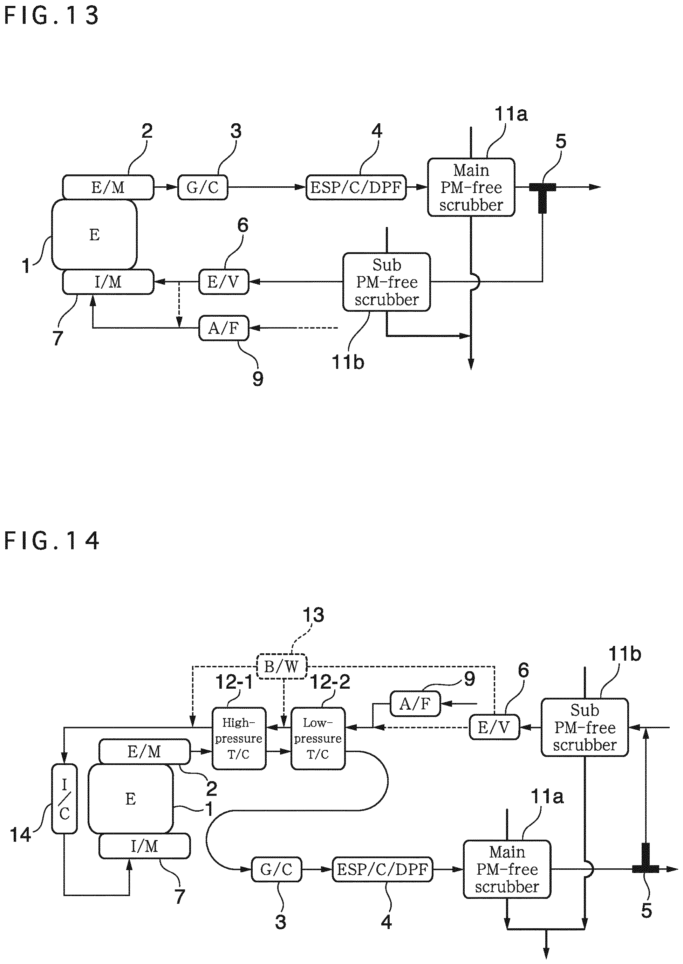

An exhaust gas purification equipment for a marine diesel engine depicted in Figure 13 as a device of a thirteenth example of the present invention is a modification example of the above device of the second example of the present invention depicted in Figure 2, and is configured by adopting two PM-free scrubbers. That is, the device is configured to have: an exhaust gas cooler 3 provided to an exhaust pipe downstream from an exhaust manifold 2 of a diesel engine 1 similarly using fuel equivalent to or lower than fuel oil in quality as fuel; an electrostatic cyclone exhaust gas purification equipment 4 and a main PM-free scrubber 11a which dissolves SOx in exhaust gas into its treatment water but hardly dissolves or removes PM (hereinafter referred to as a "main PM-free scrubber) provided downstream from the exhaust gas cooler 3; a branching part 5 provided to an exhaust pipe to a muffler (not depicted) downstream thereof to connect an EGR piping system which diverts EGR gas; and a sub PM-free scrubber 11b similar to the above (hereinafter referred to as a "sub PM-free scrubber") provided to this EGR piping system, and causes the EGR gas passing through the sub PM-free scrubber 11b to be returned to an intake pipe system from an intake manifold 7 or an air filter 9 while the EGR gas is subjected to flow-rate control by an EGR valve 6.

In the case of the above exhaust gas purification equipment configured as depicted in Figure 13, as with the above, the exhaust gas is cleaned (PM is decreased by the electrostatic cyclone exhaust gas purification equipment 4, nitrogen oxides are decreased by return of the EGR gas, and the content of SOx and so forth is decreased by the main and sub PM-free scrubbers 11a and 11b). Also, by installing, to the exhaust pipe, PM-free scrubber 11 which hardly dissolves or removes PM and the EGR piping which diverts the EGR gas from the branching part 5 of its backwash for return to intake air, of SOx such as sulfur dioxide gas that cannot be completely removed in the electrostatic cyclone exhaust gas purification equipment 4 and PM as particles, SOx is removed by the main PM-free scrubber 11a and is hardly contained in both of the exhaust gas and the EGR gas. The exhaust gas contains SOF components such as n-hexane extracts, but the contents of PM and SOx such as sulfur dioxide gas are decreased. Also, the SOx-decreased EGR gas has SOx such as sulfate further removed by the sub PM-free scrubber 11b provided to the EGR piping system branched from the branching part 5. Therefore, promotion of wearing and corrosion of engine components and corrosion of exhaust-related components are prevented to achieve extension of a maintenance interval and enhancement of longevity, and concerns of impairing durability can be eliminated for improvement. Therefore, an inexpensive material can be used. Furthermore, the combustion temperature in the combustion chamber is decreased to inhibit the occurrence of nitrogen oxides and make the exhaust gas cleaner. Therefore, concerns of more impairing durability of engine components such as a piston, a piston ring, a cylinder, a cylinder head, a supply/exhaust valve, and a valve stem can be eliminated for improvement. Thus, an inexpensive material can be used.

Furthermore, in the sub PM-free scrubber 11b which hardly dissolves or removes PM also in this exhaust gas purification equipment, as with the main PM-free scrubber 11a, only SOx is mainly dissolved in the scrubber treatment water and just a small amount of PM as particles is dissolved and contained therein. Therefore, also in post treatment with scrubber treatment water of this sub PM-free scrubber 11b which hardly dissolves or removes PM as treated waste water, as with post treatment with scrubber treatment water of the main PM-free scrubber 11a as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

An exhaust gas purification equipment for a marine diesel engine depicted in Figure 14 as a device of a fourteenth example of the present invention is a modification example of the above device of the eighth example of the present invention depicted in Figure 8, and is configured by adopting two PM-free scrubbers. That is, the device is configured to have: as a two-stage supercharging system, a high-pressure turbocharger 12-1 disposed at a upstream stage in a flow direction of exhaust gas and a low-pressure turbocharger 12-2 disposed at a downstream stage therein, downstream from an exhaust manifold 2 of a diesel engine 1 similarly using fuel equivalent to or lower than fuel oil in quality as fuel; an exhaust gas cooler 3 provided to an exhaust pipe downstream from the low-pressure turbocharger 12-2; have an electrostatic cyclone exhaust gas purification equipment 4 and a main PM-free scrubber 11a which hardly dissolves or removes PM provided downstream thereof; a branching part 5 provided downstream thereof to an exhaust pipe to a muffler (not depicted) to connect an EGR piping system which diverts EGR gas; and a sub PM-free scrubber 11b which dissolves SOx into its treatment water from the EGR gas diverted from this EGR piping system provided, and cause the EGR gas passing through the sub PM-free scrubber 11b together with intake air from an air filter 9 to be pumped by a blower 13 to an intake pipe at a low-pressure position upstream from a compressor wheel (not depicted) of the low-pressure turbocharger 12-2 or an intake pipe at an intermediate-pressure position between the high-pressure turbocharger 12-1 and the low-pressure turbocharger 12-2 or to be pumped by the blower 13 to an intake pipe at a high-pressure position downstream from a compressor wheel (not depicted) of the high-pressure turbocharger 12-1, to be returned, while the EGR gas is subjected to flow-rate control by an EGR valve 6.

In the case of the above exhaust gas purification equipment configured as depicted in Figure 14, as with the above device of the eighth example depicted in Figure 8, by installing, to the exhaust pipe, the main PM-free scrubber 11a which hardly dissolves or removes PM and the sub PM-free scrubber 11b which dissolves SOx into its treatment water from the EGR gas diverted from the EGR piping system connected to the branching part 5 downstream thereof, of SOx such as sulfur dioxide gas that cannot be completely removed by the electrostatic cyclone exhaust gas purification equipment and PM as particles, SOx is removed by the main PM-free scrubber 11a and is hardly contained in both of the exhaust gas and the EGR gas. While the exhaust gas slightly contains SOF components such as n-hexane extract, the contents of PM and SOx such as sulfur dioxide gas are also decreased. Also, by returning the EGR gas with decreased SOx, promotion of wearing and corrosion of engine components, and corrosion of exhaust related components can be prevented, extension of a maintenance interval and enhancement of longevity can be achieved, and concerns of impairing durability can be eliminated for improvement. Therefore, an inexpensive material can be used. Furthermore, with a decrease in combustion temperature in the combustion chamber, the occurrence of nitrogen oxides is inhibited, and the exhaust gas becomes clean. Still further, with the engine two-stage supercharged, the supercharge pressure is increased to improve an excess air coefficient and so forth to improve fuel consumption, and the EGR rate can be increased over a wide operation region. PM at a stage of being discharged to the exhaust manifold 2 is also reduced, thereby obtaining an effect that a desired exhaust gas purifying capability can be ensured and kept.

Furthermore, in the sub PM-free scrubber 11b which hardly dissolves or removes PM also in this exhaust gas purification equipment, only SOx is mainly dissolved in the scrubber treatment water and just a small amount of PM as particles is dissolved and contained therein. Therefore, also in post treatment with scrubber treatment water of this sub PM-free scrubber 11b which hardly dissolves or removes PM as treated waste water, as with post treatment with scrubber treatment water of the main PM-free scrubber 11a as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

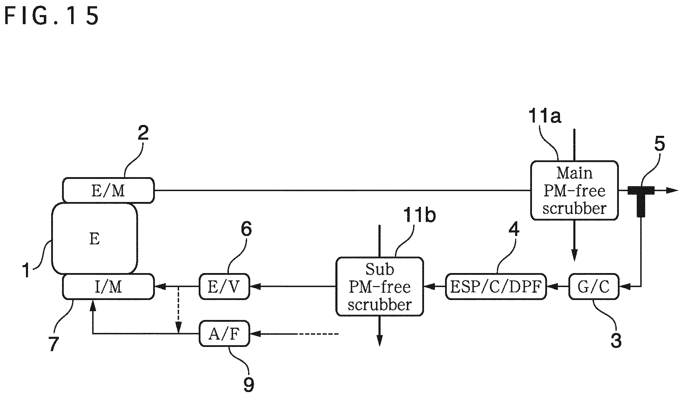

An exhaust gas purification equipment for a marine diesel engine depicted in Figure 15 as a device of a fifteenth example of the present invention is a modification example of the above device of the seventh example of the present invention depicted in Figure 7, and is configured by adopting two PM-free scrubbers. That is, the device is configured to have: a main PM-free scrubber 11a which hardly dissolves or removes PM provided to an exhaust pipe downstream from an exhaust manifold 2 of a diesel engine 1 similarly using fuel equivalent to or lower than fuel oil in quality as fuel; have a branching part 5 provided downstream thereof to an exhaust pipe to a muffler (not depicted) to connect an EGR piping system which diverts part of exhaust gas as EGR gas to the branching part 5; an exhaust gas cooler 3 and an electrostatic cyclone exhaust gas purification equipment 4 disposed to the EGR piping system; a sub PM-free scrubber 11b which dissolves SOx in the EGR gas into its treatment water but hardly dissolves or removes PM installed downstream of the electrostatic cyclone exhaust gas purification equipment 4; and an EGR valve 6 disposed downstream of this sub PM-free scrubber 11b, and causes the EGR gas to be returned to an intake pipe system from an intake manifold 7 or an air filter 9 while the flow rate of the EGR gas is controlled by the EGR valve 6.

In the case of the above exhaust gas purification equipment configured as depicted in Figure 15, as with the above, the exhaust gas is cleaned (with return of the EGR gas, nitrogen oxides are decreased, and the content of SOx and so forth is decreased by the main and sub PM-free scrubbers 11a and 11b). Also, by the main PM-free scrubber 11a which hardly dissolves or removes PM provided to the exhaust pipe downstream from the exhaust manifold 2 of the diesel engine 1, SOx is removed from PM as particles. Therefore, the EGR gas diverted from the EGR piping system connected to the branching part 5 on a downstream side of the main PM-free scrubber 11a becomes clean EGR gas. Furthermore, that clean EGR gas is cooled by the exhaust gas cooler 3, and the content of PM (SOF and ISF) in the EGR gas is efficiently decreased by the electrostatic cyclone exhaust gas purification equipment 4. Still further, the EGR gas is cooled by the sub PM-free scrubber 11b which dissolves SOx in the EGR gas into its treatment water but hardly dissolves or removes PM, allowing a high EGR rate to be more easily ensured. With a further decrease in combustion temperature in the combustion chamber, the occurrence of nitrogen oxides is inhibited, and heat dissipation from a cylinder wall surface or the like is decreased to further improve specific fuel consumption. Furthermore, with a decrease in SOx contained in the EGR gas, concerns of impairing durability of the engine and related components with engine components and exhaust-related components promoted to be worn or corroded by SOx can be eliminated for improvement. Therefore, an inexpensive material can be used. Note that since the sub PM-free scrubber 11b to be installed to the EGR piping system may have a processing performance capable of treating only EGR gas, the processing performance may be smaller than that of the main PM-free scrubber 11a which treats the entire amount of the exhaust gas, and thus a small-sized, small-capacity, inexpensive device can be provided. Also, the amount of scrubber treatment water is decreased, sludge is decreased, and the amount of discharge of scrubber treatment water as treated waste water to the ocean during sailing can also be decreased. Also, the electrostatic cyclone exhaust gas purification equipment may have a processing performance capable of treating only the EGR gas, and thus a small-sized, small-capacity, high-layout-ability, inexpensive device can be provided.

Furthermore, in the sub PM-free scrubber 11b which hardly dissolves or removes PM also in this exhaust gas purification equipment, only SOx is mainly dissolved in the scrubber treatment water and just a small amount of PM as particles is dissolved and contained therein. Therefore, also in post treatment with scrubber treatment water of this sub PM-free scrubber 11b which hardly dissolves or removes PM as treated waste water, as with post treatment with scrubber treatment water of the main PM-free scrubber 11a as treated waste water, SOx can be treated by a small-sized, simple-control treatment device with a small number of simple processes such as neutralization and filtration. Almost without requiring a function of treating PM as particles by an expensive, large-sized treatment device including a control unit with complex, sophisticated control and having low installation flexibility (including a storage facility for preventing treated waste water containing oil from being discharged to the ocean), scrubber-through operation is also possible sometimes, and discharge of treated waste water to the ocean is possible even during sailing in and outside special areas.

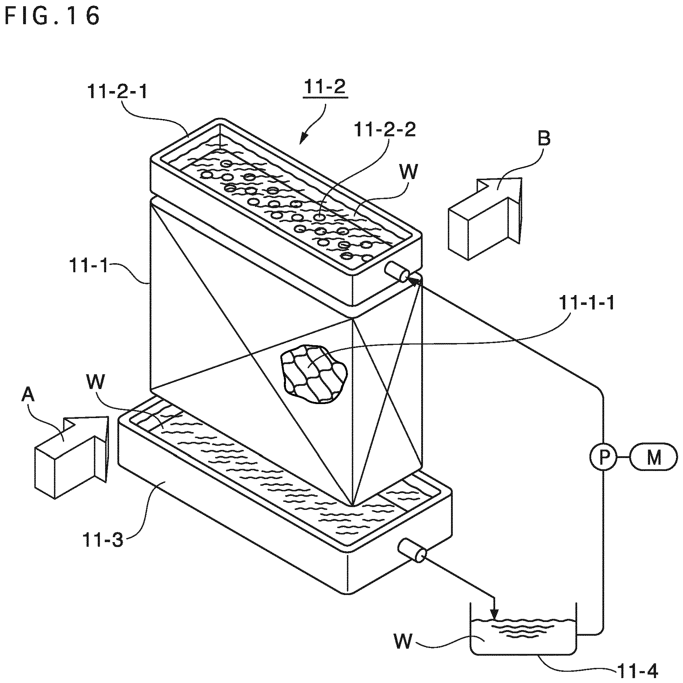

Furthermore, the PM-free scrubbers which hardly dissolve or remove PM for use in the present invention (including the main PM-free scrubber 11a and the sub PM-free scrubber 11b) are installed in the exhaust gas or EGR gas passage as described above. As those PM-free scrubbers, for example, any of those depicted in Figure 16 to Figure 19 can be adopted.

The PM-free scrubber depicted in Figure 16 is configured to have a desired number of multilayered honeycomb cores (for example, 250 mm in length × 250 mm in width × 100 mm in depth (manufactured by Nichias Corporation, product name; Honeycomb Washer)) in a honeycomb structure vertically provided as a honeycomb unit core part 11-1, the honeycomb structure in which wave plates and flat plates made of preferably a porous ceramic-made material with excellent water absorbency and with glass fiber, carbon fiber, aramid fiber, or the like taken as a skeleton are alternately multilayered, with tunnel-shaped micro flow channels 11-1-1 configured between a flat plate and a wave plate are skewed; and have a water supply unit 11-2 arranged above the honeycomb unit core part 11-1 for water supply, the water supply unit 11-2 formed of a water supply nozzle or a water supply duct so as to substantially uniformly supply water over the full width and length of the honeycomb unit core part 11-1. Scrubber treatment water (wash water) W supplied flows down to make a water thin-film layer while wetting the surface of each of the micro flow channels 11-1-1 that are skewed and nearly-perpendicular to the front surface of the honeycomb unit core part 11-1, reaches an under tray 11-3 having approximately same length and width provided below the honeycomb unit core part, and is then accommodated in a post treatment water tank 11-4 (system water amount: 20 l). The scrubber treatment water W is sent by a pump P from the tank to the water supply unit 11-2 so that the surface of each of the micro flow channels 11-1-1 is kept wet, without being dried, to maintain the water thin-film layer (water flow speed; on the order of 12 L/min) for circulated use. In the drawing, an arrow A denotes exhaust gas or EGR gas that inflows into the honeycomb unit core part 11-1 perpendicularly to the front surface of the honeycomb unit core part 11-1, an arrow B denotes exhaust gas or EGR gas with S components removed therefrom (most PM remains) that outflows from the rear side of the honeycomb unit core part 11-1, M denotes a motor, and W denotes scrubber treatment water.

In the case of this PM-free scrubber, the exhaust gas or EGR gas only diagonally travels the honeycomb unit core part 11-1 and smoothly flows along the wet surface of the water thin-film layer on the wall surface of each of the micro flow channels 11-1-1. Therefore, unlike a normal scrubber, the exhaust gas hardly crosses and collides with the surface of the water thin-film layer of the treatment water W fiercely at an angle that is almost vertical, but flows as being calmly in contact with the surface. Therefore, mutual mixture does not occur. Thus, of exhaust gas or EGR gas components, SOx such as sulfur dioxides having high affinity with water and high absorbability is dissolved into its treatment water, but PM as particles without affinity with water flows as being hardly dissolved into treatment water. Therefore, the exhaust gas and the EGR gas are discharged as having SOx reliably removed therefrom and having most PM as particles remaining and contained therein. This treatment water contains SOx, but does not contain an oily mixture with n-hexane extract as a main component. With this, scrubber-through operation is possible sometimes, and discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided.

Also, as another type having a structure similar to that of the above PM-free scrubber, a honeycomb unit core part in a honeycomb structure is adopted, which is configured by layering a desired number of honeycomb unit cores in a honeycomb structure, in which flat plates made of a net plate material made of stainless steel obtained by weaving thin-plate materials made of austenitic stainless steel or fine lines made of austenitic stainless steel, such as SUS316L, in a net shape by plain weaving, twilling, or the like are subjected to corrugation processing to be multilayered to form a wave plate shape so that diagonal directions are alternately diagonally crossed and diagonally-crossing tunnel-shaped micro flow channels 11-1-1 of the honeycomb unit core part 11-1 configured between diagonally-crossing wave plates are skewed and nearly-perpendicular to the front surface of the honeycomb unit core part 11-1. Also in a PM-free scrubber adopting this honeycomb unit core part, as with that made of porous ceramic in a honeycomb core structure described above, the exhaust gas or EGR gas only diagonally travels the honeycomb unit core part and smoothly flows along the wet surface of the water thin-film layer on the wall surface of each of the micro flow channels 11-1-1. Therefore, unlike a normal scrubber, the exhaust gas hardly crosses and collides with the surface of the treatment water-fiercely at an angle that is almost vertical, but only flows as being calmly in contact with the surface. Therefore, mutual mixture does not occur. Thus, of exhaust gas or EGR gas components, SOx such as sulfur dioxides having high affinity with water and high absorbability is dissolved into its treatment water, but PM as particles without affinity with water is hardly dissolved into treatment water. This treatment water contains SOx, but does not contain an oily mixture with n-hexane extract as a main component. With this, scrubber-through operation is possible sometimes, and discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided.

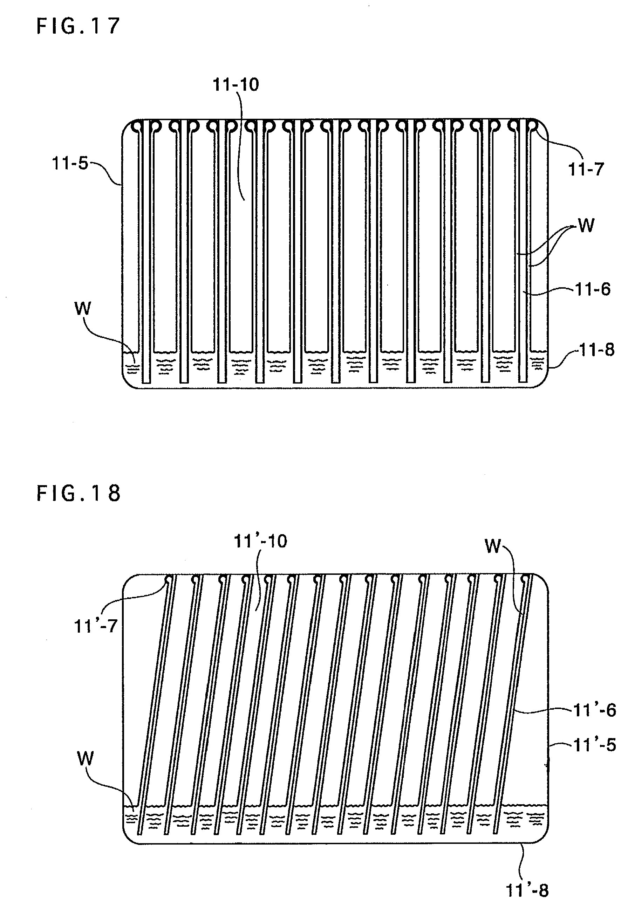

In the PM-free scrubber depicted in Figure 17, in a scrubber housing 11-5 provided to an exhaust gas or EGR gas passage, many flat-plate-shaped treatment plates 11-6 made of a stainless-steel-made net plate material obtained by weaving thin-plate materials made of austenitic stainless steel or fine lines made of austenitic stainless steel, such as SUS316L, in a net shape by plain weaving, twilling, or the like are disposed as retaining a narrow space perpendicular to a vertical direction and substantially parallel to the flow of the gas. At an upper end of each treatment plate 11-6, a treatment water supply nozzle 11-7 is provided so as to wet the entire surface on both sides of each treatment plate. At a lower end of each treatment plate, a tank unit 11-8 is provided. With a circulation pump (not depicted) driven by a piping (not depicted) and a motor, scrubber treatment water W is circulated to flow the entire surfaces on both front and rear sides of the treatment plates 11-6, thereby always wetting the treatment plates. 11-10 denotes a gas flow channel of exhaust gas or EGR gas.

Since the exhaust gas and EGR gas treated by this PM-free scrubber only smoothly flows along the surfaces of the always-wet treatment plates 11-6, unlike a normal scrubber, the exhaust gas hardly crosses or collides with the surface of the water thin-film layer of the treatment water fiercely at an angle that is almost vertical, but only flows as being calmly in contact with the surface. Therefore, mutual mixture does not occur. Thus, of exhaust gas or EGR gas components, SOx such as sulfur dioxides having high affinity with water and high absorbability is dissolved into its treatment water, but PM as particles without affinity with water is hardly dissolved into treatment water. This treatment water contains SOx, but does not contain an oily mixture with n-hexane extract as a main component. With this, scrubber-through operation is possible sometimes, and discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided.

The surface shape of the treatment plate 11-6 made of a stainless-steel-made net plate material obtained by weaving thin-plate materials made of austenitic stainless steel or fine lines made of austenitic stainless steel, such as SUS316L, in a net shape by plain weaving, twilling, or the like is not restricted to a flat plate shape, and any of a corrugated plate (not depicted) with waveforms molded in a direction in which the treatment water flows down, a corrugated plate (not depicted) with waveforms molded in a direction in which the exhaust gas or EGR gas flows, and an embossed treatment plate (not depicted) with asperities in both of the direction in which the treatment water flows down and the direction in which the exhaust gas/EGR gas flows can be selected for use. In these treatment plates, unlike a normal scrubber, the exhaust gas hardly crosses and collides with the surface of the water thin-film layer of the treatment water fiercely at an angle that is almost vertical, but only flows calmly along the surface. Therefore, mutual mixture does not occur.

The PM-free scrubber depicted in Figure 18 is a modification example of the above PM-free scrubber depicted in Figure 17. In a scrubber housing 11'-5, many flat-plate-shaped treatment plates 11'-6 are disposed as being tilted in a vertical direction and retaining a narrow space substantially in parallel to the flow of the gas. At an upper end on an upper surface side of the tilted surface of each treatment plate 11'-6, a treatment water supply nozzle 11'-7 is provided so as to wet the entire surface of the upper surface of each treated plate. At a lower end of each treatment plate, a tank unit 11'-8 is provided. With a circulation pump (not depicted) driven by a piping (not depicted) and a motor, scrubber treatment water W is circulated to flow down the entire upper surfaces of the treatment plates 11-6, thereby always wetting the treatment plates. 11'-10 denotes a gas flow channel of exhaust gas or EGR gas.

Since the exhaust gas and EGR gas treated by this PM-free scrubber only smoothly flows along portions near the surface of the water thin-film layer of water flowing down the surfaces on the upper side of the always-wet treatment plates 11-6, unlike a normal scrubber, the exhaust gas hardly crosses or collides with the surface of the water thin-film layer of the treatment water fiercely at an angle that is almost vertical, but only calmly flows along the surface. Therefore, mutual mixture does not occur. Thus, of exhaust gas or EGR gas components, SOx, which is air, has a large diffusion coefficient, high affinity with water, and high absorbability, is dissolved into its treatment water, but PM, which has a large particle diameter and a small diffusion coefficient and does not have affinity with water, is hardly dissolved into treatment water. Also, the treatment plates 11'-6 are tilted in the vertical direction and, at the upper end on the upper surface side of the tilted surface of each treatment plate 11'-6, the treatment water supply nozzle 11'-7 is provided only on the upper surface side to wet the entire upper surface of each treated plate. Therefore, even if the ship rolls to cause slight rolling to a treatment water flow flowing out from the treatment water supply nozzle 11'-7, it is difficult to cause PM to cross or collide with the treatment water with a splash of the treatment water, and it becomes easy to reliably wet the entire surface on the upper side of the treatment plate 11'-6. This treatment water contains SOx, but hardly contains PM. With this, scrubber-through operation is possible sometimes, and discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Note that the surface shape of the treatment plate 11'-6 is not restricted to a flat plate shape, and any of a corrugated plate (not depicted) with waveforms molded in a direction in which the treatment water flows down, a corrugated plate (not depicted) with waveforms molded in a direction in which the exhaust gas or EGR gas flows, a corrugated plate (not depicted) with waveforms molded in a direction crossing the direction in which the treatment water flows down, and an embossed treatment plate (not depicted) with asperities in both of the direction in which the treatment water flows down and the direction in which the exhaust gas/EGR gas flows can be selected for use. In these treatment plates, unlike a normal scrubber, the exhaust gas hardly crosses and collides with the surface of the water thin-film layer of the treatment water fiercely at an angle that is almost vertical, but only flows calmly along the surface. Therefore, mutual mixture does not occur.

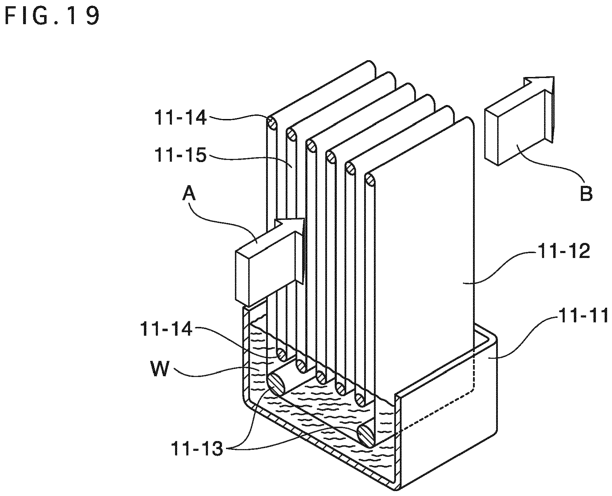

The PM-free scrubber depicted in Figure 19 is configured to have, in a scrubber housing (not depicted) provided to an exhaust gas or EGR gas passage, an endless belt 11-12 with fiber absorbency disposed, while ensuring a gas flow channel 11-15, in a serpentine shape (meandering shape) between driving rolls 11-13 provided to a lower portion in a treatment water tank 11-11 and driven rolls 11-14 provided on both upper and lower parts, and cause scrubber treatment water W in the treatment tank 11-11 to flow down by a supply nozzle (not depicted) from straight below the driven rolls 11-14 provided to upper portions on both front and rear surfaces of the endless belt 11-12 by a circulation pump (not depicted) driven by a piping (not depicted) and a motor, thereby always wetting the entire front and rear surfaces. Note that if the driving rolls 11-13 provided on the lower side and the driven rolls 11-4 provided to the lower portion are provided under the water surface of the scrubber treatment water W in the treatment water tank 11-11, both surfaces of the endless belt 11-12 can be reliably wet, which is preferable. In Figure 19, an arrow A denotes exhaust gas or EGR gas that inflows into the gas flow channel 11-15 nearly-perpendicularly to the front surface of the endless belt 11-12 provided vertically, an arrow B denotes exhaust gas or EGR gas with S components removed therefrom but with most PM remaining therein that outflows nearly-perpendicularly from the rear side of the endless belt 11-12.

Also in the case of this PM-free scrubber, unlike a normal scrubber, the exhaust gas hardly crosses or collides with the surface of the water thin-film layer of the treatment water fiercely at an angle that is almost vertical, but only calmly flows along the surface. Therefore, mutual mixture does not occur. Thus, of exhaust gas or EGR gas components, SOx such as sulfur dioxides having high affinity with water and high absorbability is dissolved into its treatment water, but PM as particles without affinity with water is hardly dissolved into treatment water. This treatment water contains SOx, but does not contain an oily mixture with n-hexane extract as a main component. With this, scrubber-through operation is possible sometimes, and discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided.

Also, as another type having a structure similar to that of the above PM-free scrubber depicted in Figure 19, there is a type which adopts an endless belt made of a thin-plate material made of an austenitic stainless steel, such as SUS316L, in place of the endless belt 11-12 with fiber absorbency (drawing is omitted). It goes without saying that, also in the PM-free scrubber adopting this endless belt made of a thin-plate material made of an austenitic stainless steel, such as SUS316L, it is possible to obtain operations and effects similar to those of that adopting the endless belt 11-12 with fiber absorbency.

### Examples

Next, the present invention is described in more detail by using examples.

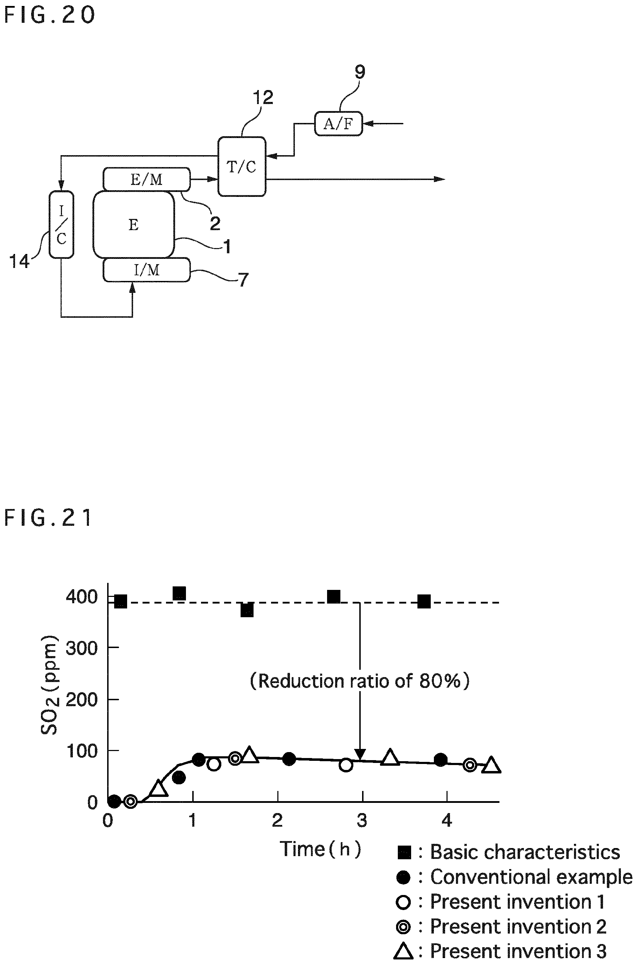

To confirm the effects of the present invention, the following experiment was performed on a marine diesel engine with conditions depicted in Table 1, and various exhaust gas characteristics and characteristics of scrubber treatment water of each example and a comparative example are described below. Basic characteristics are resulted from the case in which a device, depicted in Figure 20, not comprising an exhaust gas purification equipment was used, and a conventional example is resulted from the case in which an exhaust gas purification equipment for a diesel engine, depicted in Figure 26, configured based on Non-Patent Literature 2 was used. Also, Present invention 1 is resulted from the case in which the device of the first example depicted in Figure 1 was used, Present invention 2 is resulted from the case in which the device of the eleventh example depicted in Figure 11 was used, and Present invention 3 is resulted from the case in which the device of the twelfth example depicted in Figure 12 was used.

Sulfur dioxides have high solubility in water and seawater, and sulfur dioxide absorbing technology by a scrubber has been established. That is, by using scrubber treatment water as being maintained and managed so as to be alkaline on the order of pH = 12 by caustic soda (sodium hydroxide) or the like, a rate of removal of sulfur dioxides of 95% or higher can be achieved. A main object of the present examples is to reduce pollution of scrubber treatment water of the present exhaust gas purification equipment due to PM and to verify that drain process for scrubber treatment water can be simplified. Therefore, in the present examples, tap water was used as scrubber treatment water, and pH management such as supply of caustic soda was not performed even if the scrubber treatment water exhibits acid by absorption of sulfur dioxides.

In the present example corresponding to the present invention 1, in the above device of the first example depicted in Figure 1, that is, in the exhaust gas purification equipment configured to have an exhaust gas cooler (G/C) 3 disposed downstream from a turbine wheel (not depicted) of a turbocharger (T/C) 12 of an exhaust pipe downstream from an exhaust manifold (E/M) 2, and have an electrostatic cyclone exhaust gas purification equipment (ESP/C/DPF) 4 disposed downstream from the exhaust gas cooler (G/C) 3, and further have a PM-free scrubber 11 which dissolves SOx in exhaust gas into its treatment water but hardly dissolves PM since treatment water of the scrubber makes a water thin-film layer flowing down along a wall surface constituting the PM-free scrubber and thus the exhaust gas smoothly flows along a surface of the water thin-film layer without colliding with the treatment water of the scrubber fiercely at an angle that is almost vertical and thereby hardly removes PM, disposed to a downstream-side piping, and cause outside air to be taken to an intake manifold (I/M) 7 of the engine via a compressor wheel (not depicted) of a turbocharger (T/C) 12 to an intake pipe downstream from an air filter (A/F) 9 and an intercooler (I/C) 14, the concentrations of SO₂ in an the exhaust gas and n-hexane extraction values in the treatment water of the PM-free scrubber 11 after purifying processing by the PM-free scrubber 11 were each measured.

In the present example corresponding to the present invention 2, the above device of the eleventh example depicted in Figure 11 is configured as follows. That is, the device is configured to have a turbocharger 12 disposed to an exhaust pipe downstream from an exhaust manifold 2, have an exhaust gas cooler 3 and an electrostatic cyclone exhaust gas purification equipment 4 disposed to an exhaust pipe downstream from a turbine wheel (not depicted) of the turbocharger 12, have a branching part 5 provided to an exhaust pipe downstream from the electrostatic cyclone exhaust gas purification equipment 4 to connect an EGR piping system which diverts part of the exhaust gas as EGR gas to the branching part 5, and have a PM-free scrubber 11 which dissolves SOx in the EGR gas into its treatment water but hardly dissolves PM since treatment water of the scrubber makes a water thin-film layer flowing down along a wall surface constituting the PM-free scrubber and the EGR gas smoothly flows along a surface of the water thin-film layer without colliding with the treatment water of the scrubber fiercely at an angle that is almost vertical and thereby hardly removes PM, a steam separator 8, a blower (B/W) 13 which increases the pressure of the EGR gas for supply and pumping, and an EGR valve 6 disposed in this order to the EGR piping system, and causes the EGR gas to be returned to an intake pipe system before an intercooler while the EGR gas is subjected to flow-rate control by the EGR valve 6.

Therefore, in the device of the present invention 2, in the exhaust gas purification equipment configured such that the exhaust gas after the turbine wheel (not depicted) of the turbocharger 12 is accelerated is precooled, and only the EGR gas diverted from the exhaust gas after electrostatic cyclone exhaust gas purifying processing is treated by the PM-free scrubber 11 which hardly dissolves or removes PM and is then pumped by the blower (B/W) 13 via the steam separator 8, thereby causing an accurate amount of the EGR gas to be returned to the intake pipe before the intercooler, the concentrations of SOx and NOx in the exhaust gas after purifying processing by the PM-free scrubber 11 were each measured.

In the present example corresponding to the present invention 3, in the above device of the twelfth example depicted in Figure 12, that is, in the exhaust gas purification equipment configured to have a turbocharger 12 disposed to an exhaust pipe downstream from an exhaust manifold 2, have a branching part 5 provided to an exhaust pipe downstream from the turbocharger 12 to connect an EGR piping system which diverts part of the exhaust gas as EGR gas to the branching part 5, have an exhaust gas cooler 3 and an electrostatic cyclone exhaust gas purification equipment 4 disposed to the EGR piping system, have a PM-free scrubber 11 which dissolves SOx in the EGR gas into its treatment water but hardly dissolves PM since treatment water of the scrubber makes a water thin-film layer flowing down along a wall surface constituting the PM-free scrubber and the EGR gas smoothly flows along a surface of the water thin-film layer without colliding with the treatment water of the scrubber fiercely at an angle that is almost vertical and thereby hardly removes PM, disposed downstream from the electrostatic cyclone exhaust gas purification equipment 4, and further have a steam separator 8, a blower 13, and an EGR valve 6 disposed in this order downstream from the PM-free scrubber 11, and causes the EGR gas to be returned to an intake pipe before an intercooler while the EGR gas is subjected to flow-rate control by the EGR valve 6.

Therefore, in the device of the present invention 3, in the exhaust gas purification equipment configured such that the EGR gas is precooled in the EGR gas piping system, is treated by the PM-free scrubber 11 which hardly dissolves or removes PM after processing in the electrostatic cyclone exhaust gas purification equipment 4, and is pumped by the blower 13 via the steam separator 8 to be returned to the intake pipe before the intercooler, the concentration of NOx was measured at the exhaust pipe downstream from the turbocharger 12, and the concentration of SO₂ was measured at the EGR piping system after the PM-free scrubber 11 were each measured.

### Basic Characteristics

In the device not comprising an exhaust gas purification equipment as depicted in Figure 20, each concentration value of SO₂ and NOx in exhaust gas was measured downstream from the turbocharger 12 of the diesel engine.

### Conventional Example

In the present conventional example, in the exhaust gas purification equipment for a diesel engine depicted in Figure 26 and configured based on Patent Literature 2. That is, in an exhaust gas purification equipment configured to have an exhaust gas cooler 3 disposed downstream from a turbocharger 12, have exhaust gas cooled by the cooler treated by an electrostatic cyclone exhaust gas purification equipment 4, wherein the exhaust gas mixes with treatment water of a scrubber to cause the exhaust gas to collide with a surface of the treatment water of the scrubber fiercely at an angle that is almost vertical and then the exhaust gas is subjected to cleaning process by a normal scrubber 11-0 called a packed bed type, which is a packed tower type (not depicted) with a structure in which water is sprayed from an upper portion of a packed bed described in Table 1, concentration values of SO₂ in the exhaust gas after processing by the normal scrubber and n-hexane extraction values in the scrubber treatment water of the normal scrubber were each measured.

### [Table 1]

- Engine
   Stroke: 4-stroke type
   Number of cylinders: 3
   Bore stroke: 130 mm × 160 mm
   Turbocharger and Intercooler: Equipped
   Output: 100 PS × 1200 rpm
   EGR rate: 10%, 20%, 25%
   Fuel: Fuel Oil of Grade A + Sulfur Addition (Total percentage by mass of Sulfur Content: 2.1)
   Load factor: 50%
   -Exhaust gas cooler: water cooling
   -Electrostatic cyclone exhaust gas purification equipment:
      (1) Cylindrical collecting unit: ø 400 mm in inner diameter × 3000 mm in length
      (2) Electrostatic voltage: DC-45000 V
      (3) Cyclone collecting unit: ø 260 mm in shell diameter
   -Normal scrubber:
      Type: packed bed type (packed tower which sprays water from an upper portion of a backed bed)
      Manufacturer: Sanki Seisakusho Co., Ltd.
      Model: S-40 model
      Treatment water: tap water (without pH adjustment by caustic soda or the like)
      Water amount: 20 L
      Water flow amount: 20 L/min
      Treatment time: 5 hours
   -PM-free scrubber
      Type: water-retaining honeycomb type (product name: Honeycomb Washer)
      Honeycomb core manufacturer: Nichias Corporation
      Honeycomb size; 250 mm in length × 250 mm in width × 100 mm in depth × 2 layers
      Treatment water: tap water (without pH adjustment by caustic soda or the like)
      Water amount: 20 L
      Water flow rate; 20 L/min
      Treatment time; 5 hours

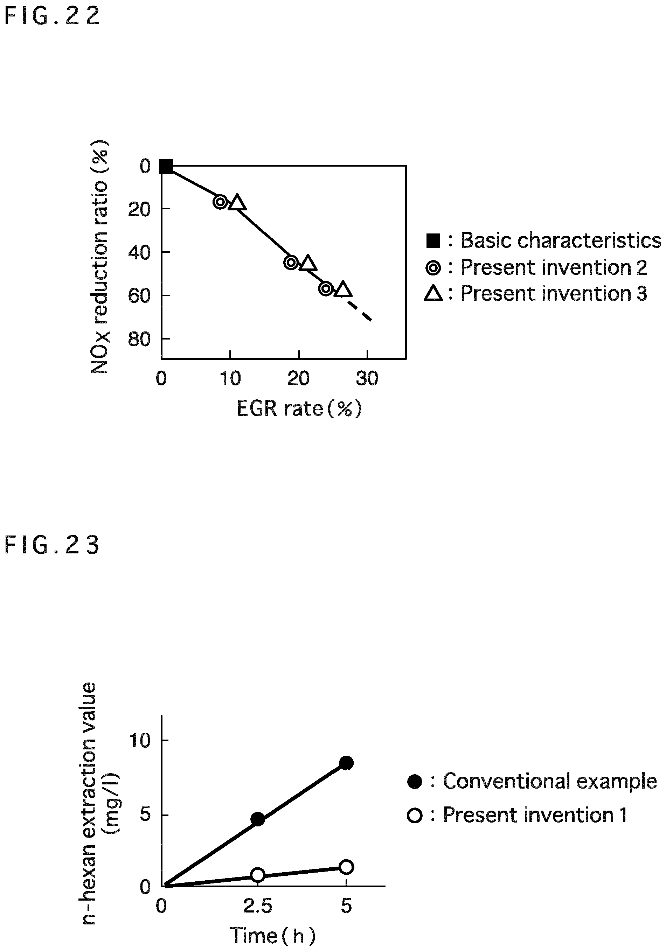

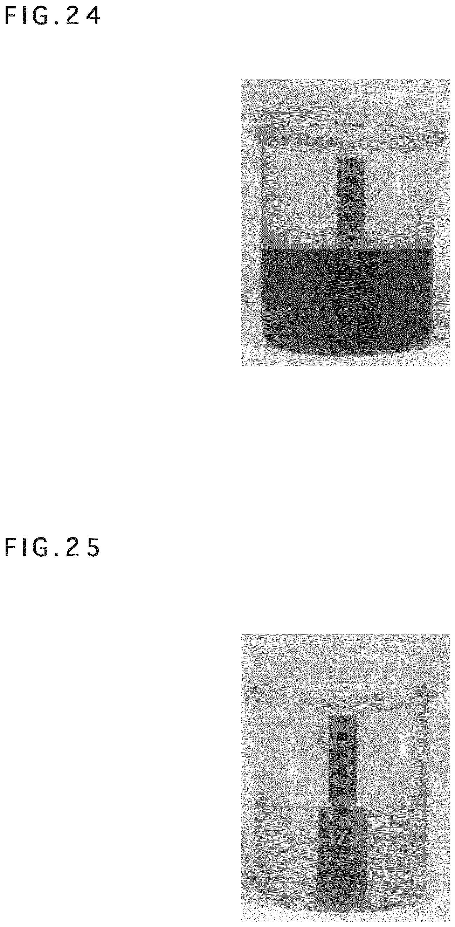

As evident from the examples described above, the following items have been revealed.
(1). In the technology with the basic characteristics, since an exhaust gas purification equipment is not equipped at all, SO₂ and NOx are not reduced, as a matter of course. Note herein that concentration statuses of SO₂ is depicted in Figure 21 and concentration statuses of NOx is depicted in Figure 22, each with a concentration in the basic characteristic as a reference (10%).
(2). In the conventional example, since an exhaust gas cooler and an electrostatic cyclone exhaust gas purification equipment are equipped to the exhaust pipe, PM in the exhaust gas is removed. However, since EGR is not performed, NOx is not reduced. Furthermore, since a commercially-available normal scrubber using tap water is used, SO₂ is reduced since the exhaust gas mixes with treatment water of a scrubber to cause the exhaust gas to collide with a surface of the treatment water of the scrubber fiercely at an angle that is almost vertical as depicted in Figure 21, but scrubber treatment water (wash water) contains not only SOx but also PM, and therefore complete removal of components adversely affecting the environment or ecosystem cannot be expected.
   Note that n-hexane extraction values in the normal scrubber treatment water at 2.5-hour and 5-hour operations are depicted in Figure 23 and comparison in transparency of the normal scrubber treatment water at 5-hour operation is depicted in Figure 24. The treatment water is remarkably polluted by PM as particles and, for drain process for normal scrubber treatment water, a large-scale treatment device, a large number of processes, and sophisticated technology are required.
(3). In Present invention 1, since the exhaust gas cooler and the electrostatic cyclone exhaust gas purification equipment are equipped to the exhaust pipe, unlike the conventional example of Figure 20, PM in the exhaust gas is removed, and NOx is not reduced because EGR is not performed. However, by equipping a PM-free scrubber which dissolves SOx in the exhaust gas into its treatment water but hardly dissolves PM, SO₂ in the exhaust gas is significantly reduced as depicted in Figure 21, and the scrubber treatment water of the PM-free scrubber hardly contain PM. Therefore, as n-hexane extraction values in the PM-free scrubber treatment water at 2.5-hour and 5-hour operations depicted in Figure 23 and comparison in transparency of the PM-free scrubber treatment water at 5-hour operation depicted in Figure 25, the treatment water is clear, and the problem of post treatment of the scrubber treatment water as treated waste water can also be solved.
(4). In Present invention 2, since the exhaust gas cooler and the electrostatic cyclone exhaust gas purification equipment are equipped to the exhaust pipe and EGR is further performed, NOx in the exhaust gas can be more greatly reduced by increasing the EGR rate as depicted in Figure 22, and can be reduced together with PM. Not only that, since the EGR gas goes via the PM-free scrubber which dissolves SOx in the EGR gas into its treatment water but hardly dissolves PM, SO₂ is significantly reduced as depicted in Figure 21, and the content of SOx, which threatens engine reliability, is significantly reduced. Furthermore, since PM in the EGR gas is reduced in advance and the scrubber treatment water of the PM-free scrubber hardly contains PM, the problem of post treatment of the scrubber treatment water as treated waste water can also be solved in a manner similar to that of Present invention 1.
(5). In Present invention 3, while exhaust gas contains PM, NOx is reduced by a degree equal to that of Present invention 2 as depicted in Figure 22, and PM in the EGR gas before and after the electrostatic cyclone exhaust gas purification equipment of the EGR piping system is decreased by a degree equal to that of the exhaust gas of Present invention 1. Also, since the PM-free scrubber which dissolves SOx into its treatment water but hardly dissolves PM is included, SO₂ in the EGR gas is reduced by a degree equal to that of the exhaust gas of Present invention 1, and the content of SOx, which threatens engine reliability, is eliminated. Furthermore, since PM in the EGR gas is reduced in advance and the scrubber treatment water of the PM-free scrubber hardly contains PM, the problem of post treatment of the scrubber treatment water as treated waste water can also be solved in a manner similar to those of Present inventions 1 and 2.

Note that the structure of the exhaust gas purification equipment for a diesel engine using fuel equivalent to or lower than fuel oil in quality as fuel of the present invention is not restricted to that of the above devices of the first to fifteenth examples, and it goes without saying that the present invention includes all of those configured by variously changing arrangements and combinations of various devices and facilities such as the exhaust gas cooler, the electrostatic cyclone exhaust gas purification equipment, the EGR cooler, the PM-free scrubber, the steam separator, and the supercharger. Also, while the exhaust gas purification equipment for a marine diesel engine has been described herein, it goes without saying that the present invention can also be applied to exhaust gas purification equipments for diesel engines for purposes other than marines, such as for electric generators and large-scale construction equipment.

### Reference Signs List

1 diesel engine
2 exhaust manifold
3 exhaust gas cooler
4 electrostatic cyclone exhaust gas purification equipment
5 branching part
6 EGR valve
7 intake manifold
8 steam separator
9 air filter
10 EGR cooler
11 PM-free scrubber (scrubber treatment device that hardly removes PM)
11-1 skewed honeycomb core
11-1-1 micro flow channels
11-2 water supply unit
11-2-1 water spray tank
11-2-2 nozzle aperture
11-3 under tray
11-4, 11-11 treatment water tank
11-5, 11'-5 scrubber housing
11-6, 11'-6 treatment plate
11-7, 11'-7 treatment water supply nozzle 11-8, 11'-8 tank unit
11-10, 11'-10, 11-15 gas flow channel
11-12 endless belt
11-13 driving roll
11-14 driven roll
11a main PM-free scrubber
11b sub PM-free scrubber
12 turbocharger
12-1 high-pressure turbocharger
12-2 low-pressure turbocharger
13 blower
14 intercooler
M motor
P pump
W treatment water
Arrow A exhaust gas or EGR gas that inflows
Arrow B exhaust gas or EGR gas with S component removed therefrom (PM almost remains) that outflows

## Claims

1. An exhaust gas purification equipment for a marine diesel engine (1) using fuel equivalent to or lower than fuel oil in quality, the exhaust gas purification equipment comprising:
an exhaust gas cooler (3) provided to an exhaust pipe continued to an exhaust manifold (2) of the engine (1);
an electrical precipitation means (4) that removes particulate matter (PM) having soluble organic fractions (SOF) and insoluble organic fractions (ISF) contained in the exhaust gas as main components, provided on a downstream side of the exhaust gas cooler (3); and
a scrubber, provided to an exhaust pipe on a downstream side of the electrical precipitation means (4), **characterized in that** the scrubber is a PM-free scrubber (11) that removes no PM since treatment water (W) of the scrubber (11) makes a water thin-film layer flowing down along a wall surface constituting the PM-free scrubber (11) and the exhaust gas smoothly flows along a surface of the water thin-film layer without crossing or colliding with the treatment water (W) of the scrubber (11).

2. An exhaust gas purification equipment for a marine diesel engine (1) according to claim 1, wherein the exhaust gas purification equipment further comprises:
a branching part (5) for causing part of the exhaust gas to branch as EGR gas provided to the exhaust pipe on a downstream side of the electrical precipitation means (4) so as to cause the EGR gas to be recirculated to intake air of the engine via an EGR piping system continued to the branching part (5); and
wherein the PM-free scrubber (11) is provided on an upstream side or a downstream side of the branching part (5) of the exhaust pipe on the downstream side of the electrical precipitation means (4), or to the EGR piping system.

3. An exhaust gas purification equipment for a marine diesel engine (1) according to claim 1, wherein the exhaust gas purification equipment further comprises:
a branching part (5) for causing part of exhaust gas to branch as EGR gas provided to an exhaust pipe continued to an exhaust manifold (2) of the engine (1);
wherein the exhaust gas cooler (3) is provided to an EGR piping system continued to the branching part (5);
wherein the electrical precipitation means (4) is provided on a downstream side of the exhaust gas cooler (3) so as to cause the EGR gas to be recirculated to intake air of the engine via the EGR piping system on a downstream side of the electrical precipitation means (4); and
wherein the EGR gas smoothly flows along a surface of the water thin-film layer without crossing or colliding with the treatment water (W) of the scrubber (11), and the PM-free scrubber (11) being provided to the EGR piping system on the downstream side of the electrical precipitation means (4) .

4. An exhaust gas purification equipment for a marine diesel engine (1) according to claim 1, wherein:
the exhaust gas cooler (3) is provided to an exhaust pipe downstream from an exhaust manifold (2) of the engine (1);
wherein a branching part (5) for causing part of the exhaust gas to branch as EGR gas provided on a downstream side of the main PM-free scrubber (11a); and
wherein the exhaust gas purification equipment further comprises additionally to the main PM-free scrubber (11a) a sub PM-free scrubber (11b) that removes no PM since the treatment water (W) of the scrubber (11b) makes a water thin-film layer flowing down along a wall surface constituting the PM-free scrubber (11b) and the EGR gas smoothly flows along a surface of the water thin-film layer without crossing or colliding with the treatment water (W) of the scrubber (11b), provided to an EGR piping system continued to the branching part (5).

5. An exhaust gas purification equipment for a marine diesel engine (1) according to claim 1, wherein the exhaust gas purification equipment further comprises:
a high-pressure turbocharger (12-1) provided at a upstream stage in a flow direction of exhaust gas and a low-pressure turbocharger (12-2) provided at a downstream stage in the flow direction of exhaust gas to an exhaust pipe downstream from an exhaust manifold (2) of the engine (1), as a two-stage supercharging system;
wherein the exhaust gas cooler (3) is provided to an exhaust pipe downstream from the low-pressure turbocharger (12-2);
the electrical precipitation means (4) that removes PM (particular matter) having soluble organic fractions (SOF) and insoluble organic fractions (ISF) contained in the exhaust gas as main components and the main PM-free scrubber (11a) that removes no PM since treatment water (W) of the scrubber (11a) makes a water thin-film layer flowing down along a wall surface constituting the PM-free scrubber (11a) and the exhaust gas smoothly flows along a surface of the water thin-film layer without crossing or colliding with the treatment water (W) of the scrubber (11a), is provided on a downstream side of the exhaust gas cooler (3);
wherein the exhaust gas purification equipment further comprises a branching part (5) for causing part of the exhaust gas to branch as EGR gas, provided on a downstream side of the main PM-free scrubber (11a);
and a sub PM-free scrubber (11b) that removes no PM since the treatment water (W) of the scrubber (11b) makes a water thin-film layer flowing down along a wall surface constituting the PM-free scrubber (11b) and the EGR gas smoothly flows along a surface of the water thin-film layer without crossing or colliding with the treatment water (W) of the scrubber (11b), provided to an EGR piping system connected to the branching part (5), so as to cause the part of the exhaust gas to be recirculated to the low-pressure turbocharger (12-2) and/or the high-pressure turbocharger (12-1).

6. An exhaust gas purification equipment for a marine diesel engine (1) according to claim 1, the exhaust gas purification equipment comprising:
the main PM-free scrubber (11a) that removes no PM since treatment water (W) of the scrubber (11a) makes a water thin-film layer flowing down along a wall surface constituting the PM-free scrubber and the exhaust gas smoothly flows along a surface of the water thin-film layer without crossing or colliding with the treatment water (W) of the scrubber (11a), disposed to an exhaust pipe on a downstream side of the electrical precipitation means (4);
a branching part (5) for causing part of the exhaust gas to branch as EGR gas provided on a downstream side of the main PM-free scrubber (11a),
a sub PM-free scrubber (11b) that removes no PM since the treatment water (W) of the scrubber (11b) makes a water thin-film layer flowing down along a wall surface constituting the PM-free scrubber (11b) and the EGR gas smoothly flows along a surface of the water thin-film layer without crossing or colliding with the treatment water (W) of the scrubber (11b), and an EGR cooler (10) disposed to an EGR piping system connected to the branching part (5), so as to cause the part of the exhaust gas to be recirculated to a low-pressure turbocharger (12-2) and/or a high-pressure turbocharger (12-1).

7. The exhaust gas purification equipment for the marine diesel engine (1) according to claim 1 or 2, wherein the PM-free scrubber (11) that removes no PM has: a core of a skewed honeycomb structure (11-1) that is arranged perpendicularly to the exhaust pipe or the EGR piping system, the skewed honeycomb structure (11-1) being composed of alternately-multilayered wave plates and flat plates made of a porous ceramic material with excellent water absorbency and with glass fiber as a framework; a water supply unit (11-2) provided to an upper portion of the core (11-1) over a nearly entire length of the core (11-1) so as to make a water thin-film layer flowing down with a surface of the core (11-1) kept wet and arranged so that the exhaust gas or EGR gas flow inflows into the honeycomb core (11-1) from the front side of the honeycomb core (11-1), passes through many tunnel-shaped micro cores (11-1-1), and outflows from the rear side of the honeycomb core (11-1); and a tray on a lower portion of the core (11-1) over a nearly entire length of the core (11-1), the tray (11-3) receiving treatment water obtained by purifying the exhaust gas.

8. The exhaust gas purification equipment for the marine diesel engine (1) according to claim 1 or 2, wherein the PM-free scrubber (11) that removes no PM has an upper tank and a lower tank provided to the exhaust pipe or the EGR piping system, and has flat plates and/or wave plates provided between both of the tanks.

9. The exhaust gas purification equipment for the marine diesel engine (1) according to claim 1 or 2, wherein the PM-free scrubber (11) that removes no PM has: a plurality of lower rolls disposed to a lower portion of the exhaust pipe or the EGR piping system and under a water surface of a tray; an endless belt (11-12) disposed in a serpentine shape between the lower rolls and a plurality of upper rolls corresponding to the lower rolls; and many wet movable wall surfaces provided to an exhaust gas flow channel by driving at least one of each of the rolls.

10. The exhaust gas purification equipment for the marine diesel engine (1) according to claim 1 or 2, wherein the PM-free scrubber (11) that removes no PM has: a plurality of lower rolls disposed to a lower portion of the exhaust pipe or the EGR piping system and under a water surface of a tray (11-3); an endless belt (11-12) disposed in a serpentine shape between the lower rolls and a plurality of upper rolls corresponding to the lower rolls, a mechanism in which at least one of the rolls is driven, and many wet movable wall surfaces provided to an exhaust gas flow channel by driving at least one of each of the rolls and causing treatment water (W) that is supplied to the tray (11-3) by a piping and a circulation pump to flow down on both front and rear surfaces of the endless belt (11-12).

## Patentansprüche

1. Abgasreinigungsanlage für einen Schiffdieselmotor (1), der einen Kraftstoff verwendet, der einem Kraftstofföl gleich oder geringer bezüglich der Qualität ist, wobei die Abgasreinigungsanlage umfasst:
einen Abgaskühler (3), der einer Abgasleitung bereitgestellt ist, die in einen Abgaskrümmer (2) des Motors (1) verläuft;
ein elektrisches Ausfällungsmittel (4), das Feinstaub (PM), der lösliche organische Teile (SOF) und unlösliche organische Teile (ISF) aufweist, die im Abgas als Hauptkomponenten enthalten sind, entfernt und an einer stromabwärtigen Seite des Abgaskühlers (3) bereitgestellt ist; und
einen Abgaswäscher für eine Abgasleitung an einer stromabwärtigen Seite des elektrischen Ausfällungsmittels (4) bereitgestellt ist,
**dadurch gekennzeichnet, dass**
der Abgaswäscher ein PM-freier Abgaswäscher (11) ist, der keinen PM entfernt, da Behandlungswasser (W) des Abgaswäschers (11) eine Wasserdünnfilmschicht nach unten entlang einer Wandfläche, die den PM-freien Abgaswäscher (11) darstellt, bildet und das Abgas reibungslos entlang einer Fläche der Wasserdünnfilmschicht strömt, ohne das Behandlungswasser (W) des Abgaswäschers (11) zu kreuzen oder mit diesem zu kollidieren.

2. Abgasreinigungsanlage für einen Schiffdieselmotor (1) nach Anspruch 1, wobei die Abgasreinigungsanlage ferner umfasst:
einen Abzweigungsteil (5) zum Veranlassen, dass ein Teil des Abgases als ein Abgasrückführungs(EGR)-Gas abgezweigt wird, das der Abgasleitung auf einer stromabwärtigen Seite des elektrischen Ausfällungsmittels (4) derart bereitgestellt wird, dass das EGR-Gas zum Rezirkulieren veranlasst wird, um Luft des Motors über ein EGR-Leitungssystem, das in den Abzweigungsteil (5) verläuft, aufzunehmen; und
wobei der PM-freie Abgaswäscher (11) an einer stromaufwärtigen Seite oder einer stromabwärtigen Seite des Abzweigungsteils (5) der Abgasleitung an der stromabwärtigen Seite des elektrischen Ausfällungsmittels (4) oder dem EGR-Leitungssystem bereitgestellt ist.

3. Abgasreinigungsanlage für einen Schiffsdieselmotor (1) nach Anspruch 1, wobei die Abgasreinigungsanlage ferner umfasst:
einen Abzweigungsteil (5) zum Veranlassen, dass ein Teil des Abgases als EGR-Gas abgezweigt wird, das einer Abgasleitung bereitgestellt wird, die in einen Abgaskrümmer (2) des Motors (1) verläuft;
wobei der Abgaskühler (3) einem EGR-Leitungssystem bereitgestellt ist, das in den Abzweigungsteil (5) verläuft;
wobei das elektrische Ausfällungsmittel (4) an einer stromabwärtigen Seite des Abgaskühlers (3) derart bereitgestellt ist, dass das EGR-Gas zum Rezirkulieren veranlasst wird, um Luft des Motors über das EGR-Leitungssystem an einer stromabwärtigen Seite des elektrischen Ausfällungsmittels (4) aufzunehmen; und
wobei das EGR-Gas reibungslos entlang einer Fläche der Wasserdünnfilmschicht strömt, ohne das Behandlungswasser (W) des Abgaswäschers (11) zu kreuzen oder mit diesem zu kollidieren, und der PM-freie Abgaswäscher (11) dem EGR-Leitungssystem an der stromabwärtigen Seite des elektrischen Ausfällungsmittels (4) bereitgestellt ist.

4. Abgasreinigungsanlage für einen Schiffsdieselmotor (1) nach Anspruch 1, wobei:
der Abgaskühler (3) einer Abgasleitung stromabwärts von einem Abgaskrümmer (2) des Motors (1) bereitgestellt ist;
wobei ein Abzweigungsteil (5) zum Veranlassen, dass ein Teil des Abgases als EGR-Gas abgezweigt wird, das an einer stromabwärtigen Seite des PM-freien Hauptabgaswäschers (11a) bereitgestellt ist; und
wobei die Abgasreinigungsanlage ferner zusätzlich zu dem PM-freien Hauptabgaswäscher (11a) einen PM-freien Teilabgaswäscher (11b) umfasst, der keinen PM entfernt, da das Behandlungswasser (W) des PM-freien Teilabgaswäschers (11b) eine Wasserdünnfilmschicht bildet, die nach unten entlang einer Wandfläche, die den PM-freien Abgaswäscher (11) darstellt, strömt und das EGR-Gas reibungslos entlang einer Fläche der Wasserdünnfilmschicht strömt, ohne das Behandlungswasser (W) des Abgaswäschers (11b), der einem EGR-Leitungssystem bereitgestellt wird, das in den Abzweigungsteil (5) verläuft, zu kreuzen oder mit diesem zu kollidieren.

5. Abgasreinigungsanlage für einen Schiffsdieselmotor (1) nach Anspruch 1, wobei die Abgasreinigungsanlage ferner umfasst:
einen Hochdruckturbolader (12-1), der an einer stromaufwärtigen Stufe in einer Strömungsrichtung des Abgases bereitgestellt ist, und einen Niederdruckturbolader (12-2), der an einer stromabwärtigen Stufe in der Strömungsrichtung des Abgases einer Abgasleitung stromabwärts von einem Abgaskrümmer (2) des Motors (1) bereitgestellt ist, als ein Zwei-Stufen-Aufladesystem;
wobei der Abgaskühler (3) einer Abgasleitung stromabwärts von dem Niederdruckturbolader (12-2) bereitgestellt ist;
das elektrische Ausfällungsmittel (4), das PM (Feinstaub) entfernt, der lösliche organische Teile (SOF) und unlösliche organische Teile (ISF) aufweist, die im Abgas als Hauptkomponenten enthalten sind, und der PM-freie Hauptabgaswäscher (11a), der keinen PM entfernt, da Behandlungswasser (W) des Abgaswäschers (11a) eine Wasserdünnfilmschicht, die nach unten entlang einer Wandfläche, die den PM-freien Abgaswäscher (11a) darstellt, strömt, bildet und das Abgas reibungslos entlang einer Fläche der Wasserdünnfilmschicht strömt, ohne das Behandlungswasser (W) des Abgaswäschers (11a) zu kreuzen oder mit diesem zu kollidieren, an einer stromabwärtigen Seite des Abgaskühlers (3) bereitgestellt ist;
wobei die Abgasreinigungsanlage ferner einen Abzweigungsteil (5) umfasst zum Veranlassen, dass ein Teil des Abgases als EGR-Gas abgezweigt wird, wobei dieser an einer stromabwärtigen Seite des PM-freien Hauptabgaswäschers (11a) bereitgestellt ist;
und einen PM-freien Teilabgaswäscher (11b), der keinen PM entfernt, da das Behandlungswasser (W) des Abgaswäschers (11b) eine Wasserdünnfilmschicht bildet, die nach unten entlang einer Wandfläche, die den PM-freien Abgaswäscher (11b) darstellt, strömt und das EGR-Gas reibungslos entlang einer Fläche der Wasserdünnfilmschicht strömt, ohne das Behandlungswasser (W) des Abgaswäschers (11b) zu kreuzen oder mit diesem zu kollidieren, der einem EGR-Leitungssystem bereitgestellt wird, das mit dem Abzweigungsteil (5) derart verbunden ist, dass der Teil des Abgases veranlasst wird, zu dem Niederdruckturbolader (12-2) und/oder dem Hochdruckturbolader (12-1) rezirkuliert zu werden.

6. Abgasreinigungsanlage für einen Schiffsdieselmotor (1) nach Anspruch 1, wobei die Abgasreinigungsanlage umfasst:
den PM-freien Hauptabgaswäscher (11a), der keinen PM entfernt, da Behandlungswasser (W) des Abgaswäschers (11a) eine Wasserdünnfilmschicht, die nach unten entlang einer Wandfläche, die den PM-freien Abgaswäscher darstellt, strömt, bildet und das Abgas reibungslos entlang einer Fläche der Wasserdünnfilmschicht strömt, ohne das Behandlungswasser (W) des Abgaswäschers (11a) zu kreuzen oder mit diesem zu kollidieren, an einer Abgasleitung an einer stromabwärtigen Seite des elektrischen Ausfällungsmittels (4) angeordnet ist;
einen Abzweigungsteil (5) zum Veranlassen, dass ein Teil des Abgases als EGR-Gas abgezweigt wird, der an einer stromabwärtigen Seite des PM-freien Hauptabgaswäschers (11a) bereitgestellt ist,
einen PM-freien Teilabgaswäscher (11b), der keinen PM entfernt, da das Behandlungswasser (W) des Abgaswäschers (11b) eine Wasserdünnfilmschicht bildet, die nach unten entlang einer Wandfläche, die den PM-freien Abgaswäscher (11) darstellt, strömt, und das EGR-Gas reibungslos entlang einer Fläche der Wasserdünnfilmschicht strömt, ohne das Behandlungswasser (W) des Abgaswäschers (11b) zu kreuzen oder mit diesem zu kollidieren, und einen EGR-Kühler (10), der an einem EGR-Leitungssystem, das mit dem Abzweigungsteil (5) verbunden ist, derart angeordnet ist, dass der Teil des Abgases veranlasst wird, zu einem Niederdruckturbolader (12-2) und/oder einem Hochdruckturbolader (12-1) rezirkuliert zu werden.

7. Abgasreinigungsanlage für den Schiffsdieselmotor (1) nach Anspruch 1 oder 2, wobei der PM-freie Abgaswäscher (11), der keinen PM entfernt, aufweist: einen Kern einer abgeschrägten Honigwabenstruktur (11-1), die senkrecht zur Abgasleitung oder dem EGR-Leitungssystem angeordnet ist, wobei die abgeschrägte Honigwabenstruktur (11-1) aus abwechselnd mehrschichtigen Wellenplättchen und flachen Plättchen besteht, die aus einem porösen Keramikmaterial mit ausgezeichneter Wassersaugfähigkeit und mit Glasfaser als ein Rahmenwerk gebildet sind; eine Wasserzufuhreinheit (11-2), die einem oberen Abschnitt des Kerns (11-1) über eine fast gesamte Länge des Kerns (11-1) bereitgestellt ist, um so eine Wasserdünnfilmschicht zu bilden, die nach unten mit einer Fläche des Kerns (11-1), die nass gehalten wird, strömt und so angeordnet ist, dass das Abgas oder die EGR-Gasströmung in den Honigwabenkern (11-1) von der Vorderseite des Honigwabenkerns (11-1) hineinströmt, viele tunnelförmige Mikrokerne (11-1-1) durchläuft und von der Rückseite des Honigwabenkerns (11-1) ausströmt; und eine Wanne an einem unteren Abschnitt des Kerns (11-1) über eine fast gesamte Länge des Kerns (11-1), wobei die Wanne (11-3) Behandlungswasser aufnimmt, das durch das Reinigen des Abgases erhalten wird.

8. Abgasreinigungsanlage für den Schiffsdieselmotor (1) nach Anspruch 1 oder 2, wobei der PM-freie Abgaswäscher (11), der keinen PM entfernt, einen oberen Tank und einen unteren Tank aufweist, die der Abgasleitung oder dem EGR-Leitungssystem bereitgestellt sind, und flache Plättchen und/oder Wellenplättchen aufweist, die zwischen beiden Tanks bereitgestellt sind.

9. Abgasreinigungsanlage für den Schiffsdieselmotor (1) nach Anspruch 1 oder 2, wobei der PM-freie Abgaswäscher (11), der keinen PM entfernt, aufweist: eine Vielzahl von unteren Rollen, die an einem unteren Abschnitt der Abgasleitung oder des EGR-Leitungssystems und unter einer Wasserfläche einer Wanne angeordnet sind; ein Endlosband (11-12), das in einer Serpentinenform zwischen den unteren Rollen und einer Vielzahl von oberen Rollen, die den unteren Rollen entsprechen, angeordnet ist; und viele nasse bewegbare Wandflächen, die an einem Abgasströmungskanal durch Antreiben mindestens einer jeder der Rollen angeordnet sind.

10. Abgasreinigungsanlage für den Schiffsdieselmotor (1) nach Anspruch 1 oder 2, wobei der PM-freie Abgaswäscher (11), der keinen PM entfernt, aufweist: eine Vielzahl von unteren Rollen, die an einem unteren Abschnitt der Abgasleitung oder des EGR-Leitungssystems und unter einer Wasserfläche einer Wanne (11-3) angeordnet sind; ein Endlosband (11-12), das in einer Serpentinenform zwischen den unteren Rollen und einer Vielzahl von oberen Rollen, die den unteren Rollen entsprechen, angeordnet ist, einen Mechanismus, bei welchem mindestens eine der Rollen angetrieben wird, und viele nasse bewegbare Wandflächen, die an einem Abgasströmungskanal angeordnet sind durch Antreiben mindestens einer jeder der Rollen und Veranlassen des Behandlungswassers (W), das der Wanne (11-3) durch eine Leitung oder eine Zirkulationspumpe zugeführt wird, sowohl an der vorderen als auch der hinteren Fläche des Endlosbands (11-12) nach unten zu strömen.

## Revendications

1. Équipement de purification de gaz d'échappement destiné à un moteur diesel marin (1) utilisant du carburant équivalent à ou inférieur à du mazout en termes de qualité, l'équipement de purification de gaz d'échappement comprenant :
un refroidisseur de gaz d'échappement (3) monté sur un tuyau d'échappement qui devient une tubulure d'échappement (2) du moteur (1) ;
un moyen de précipitation électrique (4) qui élimine de la matière particulaire (PM) présentant des fractions organiques solubles (SOF) et des fractions organiques insolubles (ISF) contenues dans le gaz d'échappement en tant que constituants principaux, monté sur une partie aval du refroidisseur de gaz d'échappement (3) ; et
un laveur, monté sur un tuyau d'échappement sur un côté aval du moyen de précipitation électrique (4),
**caractérisé en ce que**
la laveuse est une laveuse exempte de PM (11) qui n'élimine pas de PM puisque l'eau de traitement (W) de la laveuse (11) fait qu'une couche pelliculaire mince d'eau s'écoule le long d'une surface de paroi constituant la laveuse exempte de PM (11) et que le gaz d'échappement s'écoule en douceur le long d'une surface de la couche pelliculaire mince d'eau sans croiser ou sans entrer en collision avec l'eau de traitement (W) de la laveuse (11).

2. Équipement de purification de gaz d'échappement destiné à un moteur diesel marin (1) selon la revendication 1, dans lequel l'équipement de purification de gaz d'échappement comprend en outre : une partie de ramification (5) destinée à amener une partie du gaz d'échappement à se ramifier en tant que gaz EGR, montée sur le tuyau d'échappement sur un côté aval du moyen de précipitation électrique (4) de façon à amener le gaz EGR à être remis en circulation pour faire rentrer de l'air du moteur par l'intermédiaire d'un système de tuyauterie EGR qui devient la partie de ramification (5) ; et
dans lequel la laveuse exempte de PM (11) est montée sur un côté amont ou sur un côté aval de la partie de ramification (5) du tuyau de déchargement sur le côté aval du moyen de précipitation électrique (4), ou sur le système de tuyauterie EGR.

3. Équipement de purification de gaz d'échappement destiné à un moteur diesel marin (1) selon la revendication 1, dans lequel l'équipement de purification de gaz d'échappement comprend en outre :
une partie de ramification (5) amenant une partie du gaz d'échappement à se ramifier en tant que gaz EGR, montée sur un tuyau d'échappement qui devient une tubulure d'échappement (2) du moteur (1) ;
dans lequel le refroidisseur de gaz d'échappement (3) est monté sur un système de tuyauterie EGR qui devient la partie de ramification (5) ;
dans lequel le moyen de précipitation électrique (4) est monté sur un côté aval du refroidisseur de gaz d'échappement (3) de façon à amener le gaz EGR à être remis en circulation pour faire rentrer de l'air du moteur par l'intermédiaire du système de tuyauterie EGR sur un côté aval du moyen de station électrique (4) ; et
dans lequel le gaz s'écoule en douceur le long d'une surface de la couche pelliculaire fine d'eau sans croiser ou sans entrer en collision avec l'eau de traitement (W) de la laveuse (11), et la laveuse exempte de PM (11) étant montée sur le système de tuyauterie EGR sur le côté aval du moyen de précipitation électrique (4).

4. Équipement de purification de gaz d'échappement destiné à un moteur diesel marin (1) selon la revendication 1, dans lequel :
le refroidisseur de gaz d'échappement (3) est monté sur un tuyau d'échappement en aval de la tubulure d'échappement (2) du moteur (1) ;
dans lequel une partie de ramification (5) destinée à amener une partie du gaz d'échappement à se ramifier en tant que gaz EGR, montée sur le tuyau d'échappement sur un côté aval de la laveuse principale exempte de PM (11a) : et
dans lequel l'équipement de purification de gaz d'échappement comprend en outre en plus de la laveuse principale exempte de PM (11a) une laveuse secondaire exempte de PM (11b) qui n'élimine pas de PM puisque l'eau de traitement (W) de la laveuse (11b) fait qu'une couche pelliculaire mince d'eau s'écoule le long d'une surface de paroi constituant la laveuse exempte de PM (11b) et que le gaz d'échappement s'écoule en douceur le long d'une surface de la couche pelliculaire mince d'eau sans croiser ou sans entrer en collision avec l'eau de traitement (W) de la laveuse (11b), montée sur un système de tuyauterie EGR qui devient la partie de ramification (5).

5. Équipement de purification de gaz d'échappement destiné à un moteur diesel marin (1) selon la revendication 1, dans lequel l'équipement de purification de gaz échappement comprend en outre :
un turbocompresseur de suralimentation à haute pression (12-1) monté au niveau d'une phase amont dans une direction d'écoulement de gaz d'échappement et un turbocompresseur de suralimentation à basse pression (12-2) monté au niveau d'une phase aval dans la direction d'écoulement de gaz d'échappement vers un tuyau d'échappement en aval d'une tubulure d'échappement (2) du moteur (1), en tant qu'un système de suralimentation à deux phases ;
dans lequel le refroidisseur de gaz d'échappement (3) est monté sur un tuyau d'échappement en aval du turbocompresseur de suralimentation à basse pression (12-2) ;
le moyen de précipitation électrique (4) qui élimine la PM (matière particulaire) présentant des fractions organiques solubles (SOF) et des fractions organiques insolubles (ISF) contenues dans le gaz d'échappement en tant que composants principaux et la laveuse principale exempte de PM (11a) qui n'élimine pas de PM puisque l'eau de traitement (W) de la laveuse (11a) fait qu'une couche pelliculaire mince d'eau s'écoule le long d'une surface de paroi constituant la laveuse exempte de PM (11a) et que le gaz d'échappement s'écoule en douceur le long d'une surface de la couche pelliculaire mince d'eau sans croiser ou sans entrer en collision avec l'eau de traitement (W) de la laveuse (11a), est montée sur un côté aval du refroidisseur de gaz d'échappement (3) ;
dans lequel l'équipement de purification de gaz échappement comprend en outre une partie de ramification (5) destinée à amener une partie du gaz d'échappement à se ramifier en tant que gaz EGR, montée sur le tuyau d'échappement sur un côté aval de la laveuse principale exempte de PM (11a) ;
et une laveuse secondaire exempte de PM (11b) qui n'élimine pas de PM puisque l'eau de traitement (W) de la laveuse (11b) fait qu'une couche pelliculaire mince d'eau s'écoule le long d'une surface de paroi constituant la laveuse exempte de PM (11b) et que le gaz EGR s'écoule en douceur le long d'une surface de la couche pelliculaire mince d'eau sans croiser ou sans entrer en collision avec l'eau de traitement (W) de la laveuse (11b), montée sur un système de tuyauterie EGR relié à la partie de ramification (5), de façon à amener la partie du gaz d'échappement à être remis en circulation vers le turbocompresseur de suralimentation à basse pression (12-2) et/ou vers le turbocompresseur de suralimentation à haute pression (12-1).

6. Équipement de purification de gaz d'échappement destiné à un moteur diesel marin (1) selon la revendication 1, l'équipement de purification de gaz d'échappement comprenant :
la laveuse principale exempte de PM (11a) qui n'élimine pas de PM puisque l'eau de traitement (W) de la laveuse (11a) amène une couche pelliculaire fine d'eau à s'écouler le long d'une surface de paroi constituant la laveuse exempte de PM (11a) et que le gaz d'échappement s'écoule en douceur le long d'une surface de la couche pelliculaire mince d'eau sans croiser ou sans entrer en collision avec l'eau de traitement (W) de la laveuse (11a), montée sur un tuyau d'échappement situé sur le côté aval moyen de pression électrique (4) ;
une partie de ramification (5) destinée à amener une partie du gaz d'échappement à se ramifier en tant que gaz EGR, montée sur un côté aval de la laveuse principale exempte de PM (11a),
une laveuse secondaire exempte de PM (11b) qui n'élimine pas de PM puisque l'eau de traitement (W) de la laveuse (11b) fait qu'une couche pelliculaire mince d'eau s'écoule le long d'une surface de paroi constituant la laveuse exempte de PM (11b) et que le gaz EGR s'écoule en douceur le long d'une surface de la couche pelliculaire mince d'eau sans croiser ou sans entrer en collision avec l'eau de traitement (W) de la laveuse (11b), et un refroidisseur EGR (10) disposé sur un système de tuyauterie GR relié à la partie de ramification (5), de façon à amener la partie du gaz d'échappement à être remise en circulation vers un turbocompresseur de suralimentation à basse pression (12-2) et/ou vers un turbocompresseur de suralimentation à haute pression (12-1).

7. Équipement de purification de gaz d'échappement destiné à un moteur diesel marin (1) selon la revendication 1 ou la revendication 2, dans lequel la laveuse exempte de PM (11) qui n'élimine pas de PM présente : un noyau d'une structure en nid d'abeilles montée en biais (11-1) qui est agencée de manière perpendiculaire au tuyau d'échappement ou au système de tuyauterie EGR, la structure en nid d'abeilles montée en biais (11-1) étant composée de plaques d'onde à multicouches alternées et de plaques plates constituées d'un matériau céramique poreux ayant une excellente hydrophilie et de la fibre de verre en tant que charpente ; une unité de distribution d'eau (11-2) montée sur une partie supérieure du noyau (11-1) sur pratiquement toute la longueur noyau (11-1) de façon à amener une couche pelliculaire fine d'eau à s'écouler avec une surface du noyau (11-1) qui reste humide et agencée de façon à ce que le gaz d'échappement ou le gaz d'échappement EGR rentre dans le noyau en forme de nid d'abeilles (11-1) à partir du côté avant du noyau en forme de nid d'abeilles (11-1), passe à travers de nombreux micro-noyaux en forme de tunnel (11-1-1), et sorte par le côté arrière du noyau en forme de nid d'abeilles (11-1) ; et un plateau situé sur une partie inférieure du noyau (11-1) sur pratiquement toute la longueur du noyau (11-1), le plateau (11-3) recevant de l'eau de traitement obtenue par la purification du gaz d'échappement.

8. Équipement de purification de gaz d'échappement destiné à un moteur diesel marin (1) selon la revendication 1 ou la revendication 2, dans lequel la laveuse exempte de PM (11) qui n'élimine pas de PM présente un réservoir supérieur et un réservoir inférieur montés sur le tuyau d'échappement ou sur le système de tuyauterie EGR, et présente des plaques plates et/ou des plaques d'onde situées entre les deux réservoirs.

9. Équipement de purification de gaz d'échappement destiné à un moteur diesel marin (1) selon la revendication 1 ou la revendication 2, dans lequel la laveuse exempte de PM (11) qui n'élimine pas de PM présente : une pluralité de rouleaux inférieurs disposés sur une partie inférieure du tuyau d'échappement ou du système de tuyauterie EGR et sous une surface d'eau d'un plateau ; une courroie sans fin (11-12) disposée en une forme de serpentin située entre les rouleaux inférieurs et pluralité de rouleaux supérieurs correspondant aux rouleaux inférieurs ; et de nombreuses surfaces de paroi déplaçables humides montées sur un canal d'écoulement de gaz d'échappement par l'entraînement d'au moins un de chacun des rouleaux.

10. Équipement de purification de gaz d'échappement destiné à un moteur diesel marin (1) selon la revendication 1 ou la revendication 2, dans lequel la laveuse exempte de PM (11) qui n'élimine pas de PM présente : une pluralité de rouleaux inférieurs disposés sur une partie inférieure du tuyau d'échappement ou du système de tuyauterie EGR et sous une surface d'eau d'un plateau (11-3) ; une courroie sans fin (11-12) disposée en une forme de serpentin située entre les rouleaux inférieurs et pluralité de rouleaux supérieurs correspondant aux rouleaux inférieurs, un mécanisme dans lequel au moins un des rouleaux est entraîné, et de nombreuses surfaces de paroi déplaçables humides montées sur un canal d'écoulement de gaz échappement en par l'entraînement d'au moins un de chacun des rouleaux et amenant l'eau de traitement (W) qui est délivrée au plateau (11-3) au moyen d'une tuyauterie et d'une pompe de circulation à s'écouler à la fois sur les surfaces avant et arrière de la courroie sans fin (11-12).
